# EUROPEAN PATENT APPLICATION

(11) **EP 4 502 791 A1**
(43) Date of publication of application: **05.02.2025**
(21) Application number: 23802911.0
(22) Date of filing: 09.05.2023
(51) Int. Cl.: G06F 9/451, G06F 3/14, G06F 9/54

(54) **WINDOW SIZE ADJUSTMENT METHOD, AND RELATED APPARATUS AND COMMUNICATION SYSTEM**

(30) Priority: 13.05.2022 CN 202210521904
(71) Applicant: Huawei Technologies Co., Ltd., Shenzhen, Guangdong 518129 (CN)
(72) Inventor: DU, Tianyu, Shenzhen, Guangdong 518129 (CN); BIAN, Chao, Shenzhen, Guangdong 518129 (CN)
(74) Representative: Epping - Hermann - Fischer
(86) International application number: PCT/CN2023/093011
(87) International publication number: WO 2023/217142

(57) **Abstract**

This application provides a window size adjustment method, a related apparatus, and a communication system. The method is applied to a communication system including a first device and a second device. The first device may display a multi-screen collaboration window. The multi-screen collaboration window is used to display an interface of the second device. When detecting an operation of adjusting a size of the multi-screen collaboration window, the first device may notify the second device that a user interface whose interface layout adapts to the multi-screen collaboration window whose size is adjusted is to be obtained from the second device, and display the user interface in the multi-screen collaboration window. In the foregoing method, the size of the multi-screen collaboration window may be adjusted to sizes corresponding to a plurality of different length-width ratios, to improve screen space utilization of the first device and improve user experience in a multi-screen collaboration scenario.

## Description

This application claims priority to Chinese Patent Application No. 202210521904.3, filed with the China National Intellectual Property Administration on May 13, 2022 and entitled "WINDOW SIZE ADJUSTMENT METHOD, RELATED APPARATUS, AND COMMUNICATION SYSTEM", which is incorporated herein by reference in its entirety.

### TECHNICAL FIELD

This application relates to the field of terminal technologies, and in particular, to a window size adjustment method, a related apparatus, and a communication system.

### BACKGROUND

As electronic devices develop, there are more types of electronic devices. Different types of electronic devices are applicable to different scenarios and provide different functions. One user may have a plurality of types of electronic devices, for example, a mobile phone, a tablet computer, a personal computer (personal computer, PC), and a smartwatch.

In some scenarios, the user may need to use the plurality of types of electronic devices at the same time. For example, a screen of the PC is larger than that of the mobile phone, which facilitates document editing. The user wants to send a document from the mobile phone to the PC so that the user can edit the document on the PC. In a possible implementation, a document may be quickly transmitted from the mobile phone to the PC by using a multi-screen collaboration technology. The mobile phone and the PC may perform multi-screen collaboration, and the PC may display, on the screen, a window for presenting screen content of the mobile phone. The window may be referred to as a "mobile phone window". The screen content of the mobile phone may include an identifier of the document. The user may drag, in the mobile phone window, the identifier of the document to an area outside the mobile phone window on the screen of the PC, to transmit the document on the mobile phone to the PC. This can reduce frequent switching between the mobile phone and the PC, and improve work and learning efficiency of the user.

In the foregoing multi-screen collaboration scenario, a size of the mobile phone window displayed on the screen of the PC usually follows a size of the mobile phone that performs multi-screen collaboration with the PC. A layout of a user interface in the mobile phone window is the same as a layout of a user interface presented on the mobile phone. The size of the mobile phone window is usually not adjustable, or can only be scaled proportionally. That the mobile phone window follows the size of the mobile phone, especially when a plurality of mobile phone windows are displayed on the screen of the PC, causes low screen space utilization of the PC. The user cannot adjust the size of the mobile phone window to a desired size, and experience of the user in a process of using the device to perform multi-screen collaboration is poor.

### SUMMARY

This application provides a window size adjustment method, a related apparatus, and a communication system. According to the method, in a scenario in which two devices perform multi-screen collaboration, a user can conveniently adjust a size of a multi-screen collaboration window to sizes corresponding to a plurality of different length-width ratios, to meet requirements of the user for multi-screen collaboration windows of different sizes. This can not only improve screen control utilization of the device that displays the multi-screen collaboration window, but also improve user experience in a multi-screen collaboration scenario.

According to a first aspect, this application provides a window size adjustment method. A first device displays a first window, where the first window is used to display an interface of a second device, the first window has a first size, first content displayed in the first window is presented based on a first interface layout, and the first interface layout adapts to the first window having the first size. The first device receives a first operation, where the first operation is used to adjust a size of the first window to a second size, and a first length-width ratio of the first window in the first size is different from a second length-width ratio of the first window in the second size. In response to the first operation, the first device displays the first window in the second size, and presents second content in the first window based on a second interface layout, where both the second content and the first content include third content, the second interface layout adapts to the first window having the second size, and the second interface layout is different from the first interface layout.

The first device may be a large-screen device like a tablet computer or a PC. The second device may be a device like a mobile phone. A communication connection may be established between the first device and the second device, to implement multi-screen collaboration.

It can be learned from the foregoing method that, in a process of multi-screen collaboration between the first device and the second device, a user may adjust the size of the first window displayed on the first device. The user may adjust the size of the first window to a plurality of different sizes. The length-width ratio of the first window may be changed. After the size of the first window changes, a layout of the content displayed in the first window may also be adaptively adjusted to adapt to the first window whose size changes.

In this way, the user may better allocate, by adjusting the size of the first window, appropriate display areas to the first window, another multi-screen collaboration window, and one or more windows displayed when the first device runs another application, to improve screen space utilization of the first device. The user may adjust the size of the first window to a desired size. This can improve user experience of performing multi-screen collaboration by using the device.

The first window may also be referred to as a multi-screen collaboration window. That the first window is used to display an interface of a second device may specifically be: the first window may be used to display an interface of an application run in a foreground of the second device (namely, an interface displayed on a screen of the second device), or the second window may be used to display an interface of an application run in a background of the second device. In other words, the content displayed in the first window may be obtained by the second device by running a corresponding application and performing an operation like image synthesis or rendering on a user interface of the application. The first device may receive a result obtained by the second device by performing an operation like image synthesis or rendering on the user interface of the application, to display the interface of the second device in the multi-screen collaboration window based on the result.

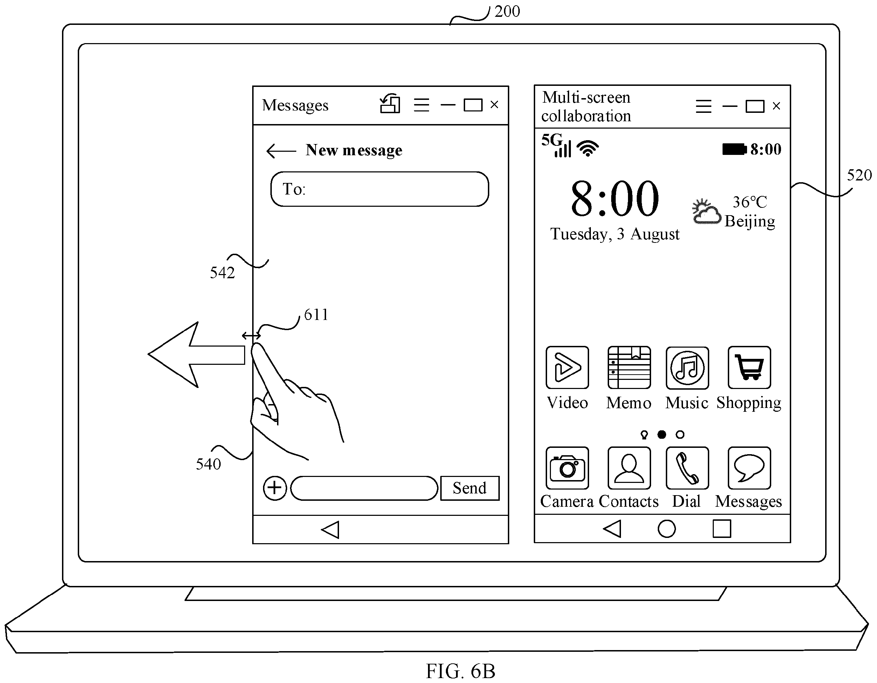

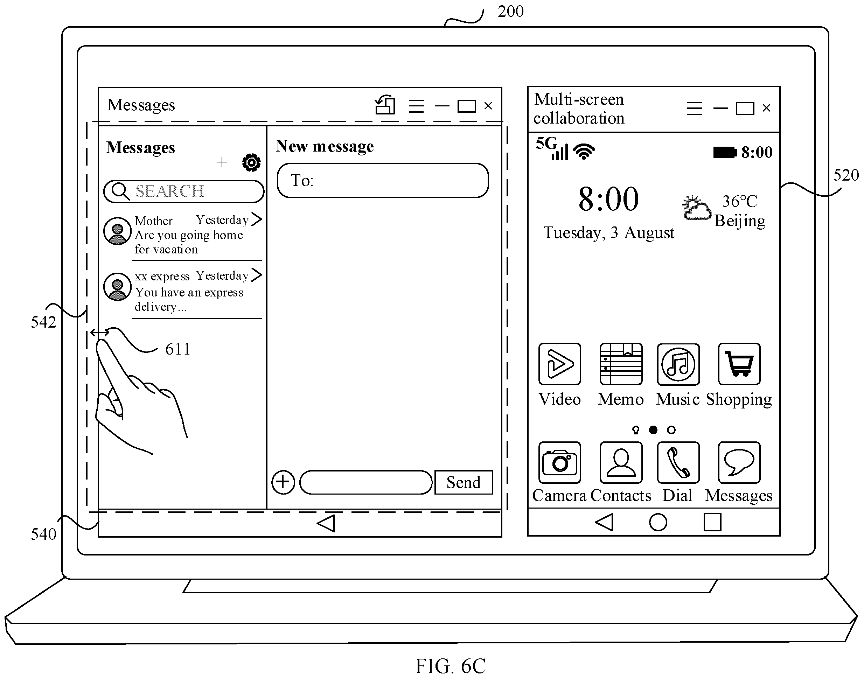

The first content may refer to an interface element in an application interface. The second content may also refer to an interface element in an application interface. For example, the first content may include an interface element of a new message creation interface in a sub-window 540 shown in FIG. 6B. The second content may include an interface element of a messages application interface in a sub-window 540 shown in FIG. 6C. It can be learned that both the first content and the second content may include the interface element (namely, the third content) of the new message creation interface in the sub-window 540 shown in FIG. 6B. In other words, before and after the size adjustment, the first content and the second content displayed in the first window are associated, and the first content and the second content include at least one same interface element.

With reference to the first aspect, in some embodiments, the third content is the first content. The second content includes the first content and fourth content, and both the first content and the fourth content are interface content of a first application.

In other words, after the size of the first window is adjusted, in addition to an interface element (namely, the first content) displayed before the size adjustment, the content displayed in the first window may further include some newly added interface elements (namely, the fourth content). In this way, an interface layout of content displayed after the size adjustment can adapt to the first window.

With reference to the first aspect, in some embodiments, the second interface layout is a columnar layout, the columnar layout indicates that a window is divided into a plurality of rows and/or a plurality of columns to display interface content on an application interface, the second content is interface content on an application interface of the first application, and the first content and the fourth content are respectively displayed in two rows or two columns of display areas of the first window. For the columnar layout, refer to an interface layout in an area 542 of the sub-window 540 shown in FIG. 6C. For example, both the first content and the fourth content are interface content of a messages application. The first content is an interface element used to create a new message in the messages application. The second content is an interface element of a message list in the messages application.

In some embodiments, when the second interface layout is the columnar layout, the second content may be an interface element obtained by the second device by running an activity of the first application. That is, the second content is interface content on an application interface of the first application.

With reference to the first aspect, in some embodiments, the first application supports a first function, the first function is used to display two application interfaces of a same application in one window, the first content is interface content on a first application interface of the first application, and the fourth content is interface content on a second application interface of the first application. The presenting second content in the first window based on a second interface layout may be specifically: determining a first display area and a second display area in the first window, displaying the first content in the first display area, and displaying the fourth content in the second display area.

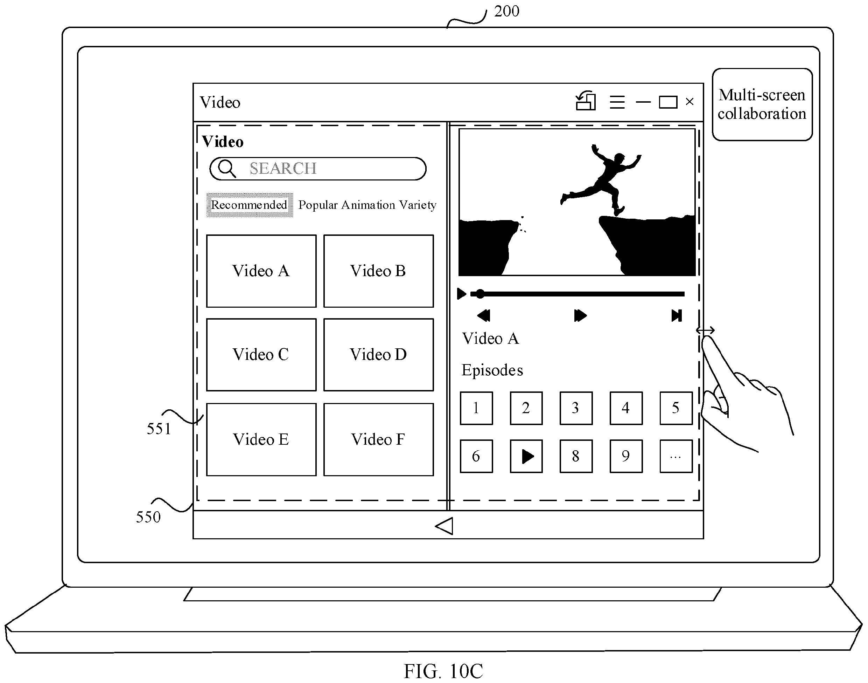

The first function may alternatively be a parallel view function, an in-application screen splitting function, or the like. For displaying, by the first device, the two application interfaces of the first application in the first window having the second size, refer to display content in a sub-window 550 shown in FIG. 10C. For example, the first application is a video application. The first content may be an interface element in a play interface of a video A. The fourth content may be an interface element in a main interface of the video application. The second interface layout may also be referred to as a parallel view layout.

In some embodiments, when the second interface layout is the parallel view layout, the second content may be an interface element obtained by the second device by running two activities of the first application. The first content may be an interface element obtained by the second device by running one activity of the first application. The fourth content may be an interface element obtained by the second device by running another activity of the first application. That is, the first content and the fourth content are respectively interface content of two different application interfaces in the first application.

With reference to the first aspect, in some embodiments, the second content is the first content, or the second content includes a part of interface elements in the first content.

That is, after the size of the first window is adjusted, the interface element displayed in the first window may still be the interface element displayed before the size adjustment, but an interface element arrangement manner and/or an interface element display style of the interface element change/changes. Alternatively, after the size of the first window is adjusted, interface elements displayed in the first window are reduced based on the interface element displayed before the size adjustment. For example, a display area of the first window in the second size is less than a display area of the first window in the first size. To enable the content displayed after the size adjustment to adapt to the first window, the interface elements displayed in the first window are reduced by a part compared with the interface element displayed before the size adjustment.

With reference to the first aspect, in some embodiments, the first size is within a first size range, the second size is within a second size range, and the first size range is different from the second size range. An interface element arrangement manner of the third content in the first interface layout and an interface element arrangement manner of the third content in the second interface layout are different.

In some embodiments, a developer of the first application may develop an interface element arrangement manner that adapts to screens of different sizes, so that the application can display interface elements in an application interface on the screens of different sizes in an appropriate arrangement manner with reference to screen features of different types of electronic devices. This improves user experience of using an application on different types of electronic devices. In this case, the interface element arrangement manner that adapts to screens of different sizes may also adapt to multi-screen collaboration windows of different sizes.

The size range may be a length-width ratio range of a window. For example, that the first size is within a first size range may mean that the first length-width ratio of the first window in the first size is within the first size range. That the second size is within a second size range may mean that the second length-width ratio of the first window in the second size is within the second size range. The developer of the first application develops a plurality of interface element arrangement manners for the application interface of the first application. The plurality of interface element arrangement manners may respectively adapt to multi-screen collaboration windows whose sizes belong to different size ranges.

In the foregoing embodiment, a layout of the display content in the first window may be determined based on a current size of the first window with reference to an interface layout resource of the application displayed in the first window. In this way, the second device can adjust the layout of the display content in the first window as the size of the first window changes, so that the display content in the first window better adapts to the first window.

With reference to the first aspect, in some embodiments, an interface element arrangement manner of the third content in the first interface layout and an interface element arrangement manner of the third content in the second interface layout are the same, and an interface element display style of the third content in the first interface layout and an interface element display style of the third content in the second interface layout are different.

In some embodiments, the developer of the first application may develop only one interface element arrangement manner for an application interface of the first application. In this case, as the size of the first window is adjusted, the second device may adjust an interface element display style without changing an interface element arrangement manner of the display content in the first window. For example, a size of an interface element is adjusted. Compared with that in a case in which pixels occupied by the displayed content in the multi-screen collaboration window are scaled proportionally when the size of the multi-screen collaboration window is adjusted, in the foregoing embodiment, the interface element display style is adjusted, so that the content displayed in the multi-screen collaboration window more adapts to the first window and is clearer. This can effectively improve user experience in adjusting the multi-screen collaboration window.

With reference to the first aspect, in some embodiments, both the first size and the second size are within a first size range.

It may be understood that the application interface of the first application has an interface element arrangement manner that adapts to screens of different sizes. When sizes of the first window before and after the size adjustment are within a same size range, the interface element arrangement manner of the display content in the first window may remain unchanged, but the interface element display style may change, to adapt to the first window after the size adjustment. With reference to the first aspect, in some embodiments, after the first device displays the first window in the second size, the first device further receives a second operation, where the second operation is used to adjust the size of the first window to a third size, and a length-width ratio of the first window in the third size is the same as the second length-width ratio. In response to the second operation, the first device displays the first window in the third size, and presents the second content in the first window based on a third interface layout, where the third interface layout adapts to the first window having the third size. An interface element arrangement manner of the second content in the third interface layout and an interface element arrangement manner of the second content in the second interface layout are the same, and an interface element display style of the second content in the third interface layout and an interface element display style of the second content in the second interface layout are different.

In other words, in a process of adjusting the size of the first window by the user, the length-width ratio of the first window may be changed or may remain unchanged.

With reference to the first aspect, in some embodiments, the first device displays a second window, and content displayed in the second window is synchronized with content displayed on a screen of the second device; and a length-width ratio of the second window is determined based on a screen size of the second device, and the length-width ratio of the second window remains unchanged.

Both the first window and the second window are multi-screen collaboration windows. The first window may be referred to as a sub-window. The second window may be referred to as a primary window. The primary window may be a first window established when the first device and the second device perform multi-screen collaboration. The user may implement reverse control on the second device by using content displayed in the primary window. The sub-window may be a window that is separated from the primary window by using a window twin control displayed on the primary window and that is independent of the primary window.

According to a second aspect, this application provides a window size adjustment method. The method may be applied to a communication system including a first device and a second device. The first device displays a first window, where the first window is used to display an interface of the second device, the first window has a first size, first content displayed in the first window is presented based on a first interface layout, and the first interface layout adapts to the first window having the first size. The first device receives a first operation, where the first operation is used to adjust a size of the first window to a second size, and a first length-width ratio of the first window in the first size is different from a second length-width ratio of the first window in the second size. In response to the first operation, the first device sends a first message to the second device, where the first message includes a first identifier of the first window and the second size. The second device determines, based on the first message, second content presented based on a second interface layout, and obtains first display data, where both the second content and the first content include third content, the second interface layout adapts to the first window having the second size, and the second interface layout is different from the first interface layout. The second device sends the first display data to the first device. The first device displays the first window in the second size, and presents the second content in the first window based on the first display data and the second interface layout.

The first device may be a large-screen device like a tablet computer or a PC. The second device may be a device like a mobile phone. A communication connection may be established between the first device and the second device, to implement multi-screen collaboration.

It can be learned from the foregoing method that, in a process of multi-screen collaboration between the first device and the second device, a user may adjust the size of the first window displayed on the first device. The user may adjust the size of the first window to a plurality of different sizes. The length-width ratio of the first window may be changed. After the size of the first window changes, a layout of content displayed in the first window may also be adaptively adjusted to adapt to the first window whose size changes.

In this way, the user may better allocate, by adjusting the size of the first window, appropriate display areas to the first window, another multi-screen collaboration window, and one or more windows displayed when the first device runs another application, to improve screen space utilization of the first device. The user may adjust the size of the first window to a desired size. This can improve user experience of performing multi-screen collaboration by using the device.

The first window may also be referred to as a multi-screen collaboration window. That the first window is used to display an interface of the second device may specifically be: the first window may be used to display an interface of an application run in a foreground of the second device (namely, an interface displayed on a screen of the second device), or the second window may be used to display an interface of an application run in a background of the second device. In other words, the content displayed in the first window may be obtained by the second device by running a corresponding application and performing an operation like image synthesis or rendering on a user interface of the application. The first device may receive a result obtained by the second device by performing an operation like image synthesis or rendering on the user interface of the application, to display the interface of the second device in the multi-screen collaboration window based on the result.

The first content may refer to an interface element in an application interface. The second content may also refer to an interface element in an application interface. For example, the first content may include an interface element of a new message creation interface in a sub-window 540 shown in FIG. 6B. The second content may include an interface element of a messages application interface in a sub-window 540 shown in FIG. 6C. It can be learned that both the first content and the second content may include the interface element (namely, the third content) of the new message creation interface in the sub-window 540 shown in FIG. 6B. In other words, before and after the size adjustment, the first content and the second content displayed in the first window are associated, and the first content and the second content include at least one same interface element.

With reference to the second aspect, in some embodiments, the third content is the first content. The second content includes the first content and fourth content, and both the first content and the fourth content are interface content of a first application.

With reference to the second aspect, in some embodiments, the second interface layout is a columnar layout, the columnar layout indicates that a window is divided into a plurality of rows and/or a plurality of columns to display interface content on an application interface, the second content is interface content on an application interface of the first application, and the first content and the fourth content are respectively displayed in two rows or two columns of display areas of the first window. For the columnar layout, refer to an interface layout in an area 542 of the sub-window 540 shown in FIG. 6C. For example, both the first content and the fourth content are interface content of a messages application. The first content is an interface element used to create a new message in the messages application. The second content is an interface element of a message list in the messages application.

In some embodiments, when the second interface layout is the columnar layout, the second content may be an interface element obtained by the second device by running an activity of the first application. That is, the second content is interface content on an application interface of the first application.

With reference to the second aspect, in some embodiments, the first application supports a first function, the first function is used to display two application interfaces of a same application in one window, the first content is interface content on a first application interface of the first application, and the fourth content is interface content on a second application interface of the first application. The presenting the second content in the first window based on the second interface layout may be specifically: determining a first display area and a second display area in the first window, displaying the first content in the first display area, and displaying the fourth content in the second display area.

The first function may alternatively be a parallel view function, an in-application screen splitting function, or the like. For displaying, by the first device, the two application interfaces of the first application in the first window having the second size, refer to display content in a sub-window 550 shown in FIG. 10C. For example, the first application is a video application. The first content may be an interface element in a play interface of a video A. The fourth content may be an interface element in a main interface of the video application. The second interface layout may also be referred to as a parallel view layout.

In some embodiments, when the second interface layout is the parallel view layout, the second content may be an interface element obtained by the second device by running two activities of the first application. The first content may be an interface element obtained by the second device by running one activity of the first application. The fourth content may be an interface element obtained by the second device by running another activity of the first application. That is, the first content and the fourth content are respectively interface content of two different application interfaces in the first application.

With reference to the second aspect, in some embodiments, the second content is the first content, or the second content includes a part of interface elements in the first content.

With reference to the second aspect, in some embodiments, the first size is within a first size range, the second size is within a second size range, and the first size range is different from the second size range. An interface element arrangement manner of the third content in the first interface layout and an interface element arrangement manner of the third content in the second interface layout are different.

In some embodiments, a developer of the first application may develop an interface element arrangement manner that adapts to screens of different sizes, so that the application can display interface elements in an application interface on the screens of different sizes in an appropriate arrangement manner with reference to screen features of different types of electronic devices. This improves user experience of using an application on different types of electronic devices. In this case, the interface element arrangement manner that adapts to screens of different sizes may also adapt to multi-screen collaboration windows of different sizes.

The size range may be a length-width ratio range of a window. For example, that the first size is within a first size range may mean that the first length-width ratio of the first window in the first size is within the first size range. That the second size is within a second size range may mean that the second length-width ratio of the first window in the second size is within the second size range. The developer of the first application develops a plurality of interface element arrangement manners for the application interface of the first application. The plurality of interface element arrangement manners may respectively adapt to multi-screen collaboration windows whose sizes belong to different size ranges.

In the foregoing embodiment, a layout of the display content in the first window may be determined based on a current size of the first window with reference to an interface layout resource of the application displayed in the first window. In this way, the second device can adjust the layout of the display content in the first window as the size of the first window changes, so that the display content in the first window better adapts to the first window.

With reference to the second aspect, in some embodiments, an interface element arrangement manner of the third content in the first interface layout and an interface element arrangement manner of the third content in the second interface layout are the same, and an interface element display style of the third content in the first interface layout and an interface element display style of the third content in the second interface layout are different.

In some embodiments, the developer of the first application may develop only one interface element arrangement manner for an application interface of the first application. In this case, as the size of the first window is adjusted, the second device may adjust an interface element display style without changing an interface element arrangement manner of the display content in the first window. For example, a size of an interface element is adjusted. Compared with that in a case in which pixels occupied by the displayed content in the multi-screen collaboration window are scaled proportionally when the size of the multi-screen collaboration window is adjusted, in the foregoing embodiment, the interface element display style is adjusted, so that the content displayed in the multi-screen collaboration window more adapts to the first window and is clearer. This can effectively improve user experience in adjusting the multi-screen collaboration window.

With reference to the second aspect, in some embodiments, both the first size and the second size are within a first size range.

It may be understood that the application interface of the first application has an interface element arrangement manner that adapts to screens of different sizes. When sizes of the first window before and after the size adjustment are within a same size range, the interface element arrangement manner of the display content in the first window may remain unchanged, but the interface element display style may change, to adapt to the first window after the size adjustment. With reference to the second aspect, in some embodiments, after the first device displays the first window in the second size, the first device further receives a second operation, where the second operation is used to adjust the size of the first window to a third size, and a length-width ratio of the first window in the third size is the same as the second length-width ratio. In response to the second operation, the first device sends a second message to the second device, where the second message includes the first identifier and the third size. The second device adjusts an interface layout of the second content to a third interface layout based on the second message, and obtains second display data, where the third interface layout adapts to the first window having the third size. The second device sends the second display data to the first device. The first device displays the first window in the third size, and presents the second content in the first window based on the second display data and the third interface layout. An interface element arrangement manner of the second content in the third interface layout and an interface element arrangement manner of the second content in the second interface layout are the same, and an interface element display style of the second content in the third interface layout and an interface element display style of the second content in the second interface layout are different.

In other words, in a process of adjusting the size of the first window by the user, the length-width ratio of the first window may be changed or may remain unchanged.

With reference to the second aspect, in some embodiments, the second device obtains third display data based on interface content displayed on a screen, and sends the third display data to the first device. The first device displays a second window, and displays fifth content in the second window based on the third display data, where the fifth content is synchronized with the content displayed on the screen of the second device; and a length-width ratio of the second window is determined based on a screen size of the second device, and the length-width ratio of the second window remains unchanged.

Both the first window and the second window are multi-screen collaboration windows. The first window may be referred to as a sub-window. The second window may be referred to as a primary window. The primary window may be a first window established when the first device and the second device perform multi-screen collaboration. The user may implement reverse control on the second device by using content displayed in the primary window. The sub-window may be a window that is separated from the primary window by using a window twin control displayed on the primary window and that is independent of the primary window.

According to a third aspect, this application provides a window size adjustment method. A second device determines to display first content in a first window, where the first content is presented based on a first interface layout, the first window is a window that is displayed on a first device and that is used to display an interface of the second device, and the first interface layout adapts to the first window having a first size. The second device obtains a first video stream based on the first content and the first interface layout, and sends the first video stream to the first device, where the first video stream is used to present the first content in the first window based on the first interface layout. The second device receives a first message, where the first message includes a first identifier of the first window and a second size, and a first length-width ratio of the first window in the first size is different from a second length-width ratio of the first window in the second size. The second device determines, based on the first message, to display second content in the first window, where the second content is presented based on a second interface layout, both the second content and the first content include third content, the second interface layout adapts to the first window having the second size, and the second interface layout is different from the first interface layout. The second device obtains a second video stream based on the second content and the first interface layout, and sends the second video stream to the first device, where the second video stream is used to present the first content in the first window based on the second interface layout.

The first device may be a large-screen device like a tablet computer or a PC. The second device may be a device like a mobile phone. A communication connection may be established between the first device and the second device, to implement multi-screen collaboration.

It can be learned from the foregoing method that, in a process of multi-screen collaboration between the first device and the second device, a user may adjust the size of the first window displayed on the first device. The user may adjust the size of the first window to a plurality of different sizes. The length-width ratio of the first window may be changed. After the size of the first window changes, a layout of the content displayed in the first window may also be adaptively adjusted to adapt to the first window whose size changes.

In this way, the user may better allocate, by adjusting the size of the first window, appropriate display areas to the first window, another multi-screen collaboration window, and one or more windows displayed when the first device runs another application, to improve screen space utilization of the first device. The user may adjust the size of the first window to a desired size. This can improve user experience of performing multi-screen collaboration by using the device.

The first window may also be referred to as a multi-screen collaboration window. That the first window is used to display an interface of the second device may specifically be: the first window may be used to display an interface of an application run in a foreground of the second device (namely, an interface displayed on a screen of the second device), or the second window may be used to display an interface of an application run in a background of the second device. In other words, the content displayed in the first window may be obtained by the second device by running a corresponding application and performing an operation like image synthesis or rendering on a user interface of the application. The first device may receive a result obtained by the second device by performing an operation like image synthesis or rendering on the user interface of the application, to display the interface of the second device in the multi-screen collaboration window based on the result.

The first content may refer to an interface element in an application interface. The second content may also refer to an interface element in an application interface. For example, the first content may include an interface element of a new message creation interface in a sub-window 540 shown in FIG. 6B. The second content may include an interface element of a messages application interface in a sub-window 540 shown in FIG. 6C. It can be learned that both the first content and the second content may include the interface element (namely, the third content) of the new message creation interface in the sub-window 540 shown in FIG. 6B. In other words, before and after the size adjustment, the first content and the second content displayed in the first window are associated, and the first content and the second content include at least one same interface element.

Both the first video stream and the second video stream may be obtained by the second device by performing an operation like image synthesis or rendering on a user interface of an application after the second device determines, based on a size of the first window, an interface layout that adapts to the first window. The first video stream and the second video stream may also be referred to as names such as display data. The first device may display a corresponding application interface in the first window based on a video stream (or display data) from the second device.

With reference to the third aspect, in some embodiments, the third content is the first content. The second content includes the first content and fourth content, and both the first content and the fourth content are interface content of a first application.

In other words, after the size of the first window is adjusted, in addition to an interface element (namely, the first content) displayed before the size adjustment, the content displayed in the first window may further include some newly added interface elements (namely, the fourth content). In this way, an interface layout of content displayed after the size adjustment can adapt to the first window.

With reference to the third aspect, in some embodiments, the second interface layout is a columnar layout, the columnar layout indicates that a window is divided into a plurality of rows and/or a plurality of columns to display interface content on an application interface, the second content is interface content on an application interface of the first application. For the columnar layout, refer to an interface layout in an area 542 of the sub-window 540 shown in FIG. 6C. For example, both the first content and the fourth content are interface content of a messages application. The first content is an interface element used to create a new message in the messages application. The second content is an interface element of a message list in the messages application.

In some embodiments, when the second interface layout is the columnar layout, the second content may be an interface element obtained by the second device by running an activity of the first application. That is, the second content is interface content on an application interface of the first application.

With reference to the third aspect, in some embodiments, the first application supports a first function, and the first function is used to display two application interfaces of a same application in one window, where the first content is interface content on a first application interface of the first application, and the fourth content is interface content on a second application interface of the first application.

The first function may alternatively be a parallel view function, an in-application screen splitting function, or the like. For displaying, by the first device, the two application interfaces of the first application in the first window having the second size, refer to display content in a sub-window 550 shown in FIG. 10C. For example, the first application is a video application. The first content may be an interface element in a play interface of a video A. The fourth content may be an interface element in a main interface of the video application. The second interface layout may also be referred to as a parallel view layout.

In some embodiments, when the second interface layout is the parallel view layout, the second content may be an interface element obtained by the second device by running two activities of the first application. The first content may be an interface element obtained by the second device by running one activity of the first application. The fourth content may be an interface element obtained by the second device by running another activity of the first application. That is, the first content and the fourth content are respectively interface content of two different application interfaces in the first application.

With reference to the third aspect, in some embodiments, after the second device sends the second video stream to the first device, the second device further receives a second message, where the second message includes the first identifier and a third size, and a length-width ratio of the first window in the third size is the same as the second length-width ratio. The second device adjusts an interface layout of the second content to a third interface layout based on the second message, and obtains a third video stream, where the third interface layout adapts to the first window having the third size, and the third video stream is used to present the first content in the first window based on the third interface layout. An interface element arrangement manner of the second content in the third interface layout and an interface element arrangement manner of the second content in the second interface layout are the same, and an interface element display style of the second content in the third interface layout and an interface element display style of the second content in the second interface layout are different. The second device sends the third video stream to the first device.

According to a fourth aspect, this application provides an electronic device. The electronic device may include a memory and a processor. The memory may be configured to store a computer program, and the processor may be configured to invoke the computer program, so that the electronic device performs any possible implementation method in the first aspect or the third aspect.

According to a fifth aspect, this application provides a computer-readable storage medium, including instructions.

When the instructions are run on an electronic device, the electronic device is enabled to perform any possible implementation method in the first aspect or the third aspect.

According to a sixth aspect, this application provides a computer program product, where the computer program product may include computer instructions, and when the computer instructions are run on an electronic device, the electronic device is enabled to perform any possible implementation method in the first aspect or the third aspect.

According to a seventh aspect, this application provides a chip, where the chip is used in an electronic device, the chip includes one or more processors, and the processor is configured to invoke computer instructions, so that the electronic device performs any possible implementation method in the first aspect or the third aspect.

It may be understood that the electronic device provided in the fourth aspect, the computer-readable storage medium provided in the fifth aspect, the computer program product provided in the sixth aspect, and the chip provided in the seventh aspect are all configured to perform the method provided in embodiments of this application. Therefore, for beneficial effects that can be achieved by the method, refer to beneficial effects in a corresponding method. Details are not described herein again.

### BRIEF DESCRIPTION OF DRAWINGS

FIG. 1 is a diagram of an architecture of a communication system according to an embodiment of this application;
FIG. 2A is a diagram of a structure of an electronic device 100 according to an embodiment of this application;
FIG. 2B is a diagram of a structure of an electronic device 200 according to an embodiment of this application;
FIG. 3 is a block diagram of a software structure of an electronic device 100 according to an embodiment of this application;
FIG. 4 is a diagram of an architecture of another communication system according to an embodiment of this application;
FIG. 5A-1 to FIG. 5E are some diagrams of a multi-screen collaboration scenario according to an embodiment of this application;
FIG. 6A-1 to FIG. 6C are some diagrams of a scenario of adjusting a window size according to an embodiment of this application;
FIG. 7A and FIG. 7B are diagrams of some application interface layouts that adapt to screens of different sizes according to an embodiment of this application;
FIG. 8A and FIG. 8B are some diagrams of another scenario of adjusting a window size according to an embodiment of this application;
FIG. 8C and FIG. 8D are diagrams of some application interface layouts that adapt to screens of different sizes according to an embodiment of this application;
FIG. 9A and FIG. 9B are a flowchart of a window size adjustment method according to an embodiment of this application;
FIG. 10A-1 to FIG. 10C are some diagrams of another scenario of adjusting a window size according to an embodiment of this application;
FIG. 11A to FIG. 11C are a flowchart of another window size adjustment method according to an embodiment of this application;
FIG. 12A to FIG. 12C are some diagrams of another scenario of adjusting a window size according to an embodiment of this application; and
FIG. 13A and FIG. 13B are diagrams of some other scenarios of adjusting a window size according to an embodiment of this application.

### DESCRIPTION OF EMBODIMENTS

The following describes technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. Singular expressions: "a", "the", "the foregoing", "this", and "one" used in this specification and the appended claims of this application are also intended to include an expression such as "one or more", unless otherwise specified in the context clearly. It should be further understood that in the following embodiments of this application, "at least one" and "one or more" mean one, two, or more (including two). A term "and/or" is used to describe an association relationship between associated objects and represents that three relationships may exist. For example, A and/or B may represent the following cases: Only A exists, both A and B exist, and only B exists, where A and B each may be singular or plural. A character "/" generally indicates an "or" relationship between the associated objects.

Reference to "an embodiment", "some embodiments", or the like described in this specification indicates that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. A term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, a word "example", "for example", or the like is used to represent giving an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language like java or an extensible markup language (extensible markup language, XML). The source code of an interface is parsed and rendered on an electronic device, and finally presented as content that can be identified by the user. The user interface is usually represented in a form of a graphical user interface (graphical user interface, GUI), and is a user interface that is related to a computer operation and that is displayed in a graphic manner. The graphical user interface may be visual interface elements such as text, an icon, a button, a menu, a tab, a text box, a dialog box, a status bar, a navigation bar, and a widget displayed on a screen of the electronic device.

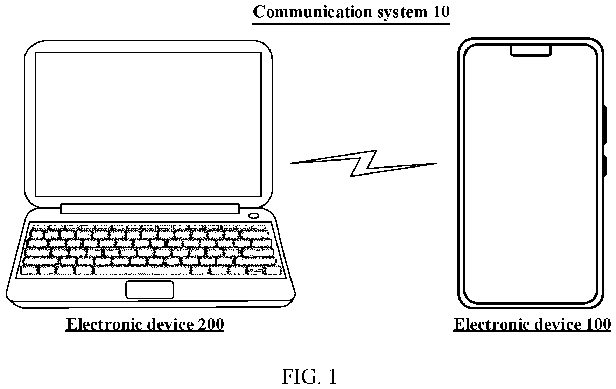

This application provides a window size adjustment method. The method may be applied to a communication system 10 including two electronic devices that communicate with each other shown in FIG. 1. The two electronic devices may be an electronic device 100 and an electronic device 200 respectively. The electronic device 200 may display, on a screen, a window for presenting an interface of the electronic device 100. To distinguish between the window for displaying an interface of the electronic device 100 and a window that is displayed when the electronic device 200 runs another application, the window for displaying an interface of the electronic device 100 is referred to as a multi-screen collaboration window in this application. A name of the multi-screen collaboration window is not limited in embodiments of this application.

Content displayed in the multi-screen collaboration window may be obtained by the electronic device 100 by running a corresponding application and performing an operation like image synthesis or rendering on a user interface of the application. The electronic device 200 may receive a result obtained by the electronic device 100 by performing an operation like image synthesis or rendering on the user interface of the application, to display the interface of the electronic device 100 in the multi-screen collaboration window based on the result. The interface of the electronic device 100 displayed in the multi-screen collaboration window may be a user interface of an application run in a foreground of the electronic device 100, or may be a user interface of an application run in a background of the electronic device 100. If the user interface of the application run in the foreground of the electronic device 100 is displayed in the multi-screen collaboration window, content displayed in the multi-screen collaboration window may be the same as content displayed on a screen of the electronic device 100. If the user interface of the application run in the background of the electronic device 100 is displayed in the multi-screen collaboration window, content displayed in the multi-screen collaboration window may be different from the content displayed on the screen of the electronic device 100. In some embodiments, the electronic device 200 may display a plurality of multi-screen collaboration windows on the screen. Display user interfaces of different applications in the electronic device 100 may be respectively displayed in the plurality of multi-screen collaboration windows.

In the window size adjustment method provided in this application, the electronic device 200 may detect an operation of adjusting a size of the multi-screen collaboration window. The electronic device 200 may send an adjusted size of the multi-screen collaboration window to the electronic device 100. The electronic device 100 may determine an application to which content displayed in the multi-screen collaboration window belongs, and adjust a layout of an application interface based on the adjusted size of the multi-screen collaboration window, so that the layout of the application interface adapts to the multi-screen collaboration window obtained after the size adjustment. The layout of the application interface may include display styles (such as a size, a color, and a shape) of visual interface elements such as a text, an icon, a button, a menu, and a tab of the application, and display positions and an arrangement manner of the visual interface elements on a user interface. The electronic device 100 may send, to the electronic device 200, data of an application interface obtained after layout adjustment. Then, the electronic device 200 may display, based on the data of the application interface obtained after layout adjustment, the application interface obtained after layout adjustment in the multi-screen collaboration window obtained after the size adjustment.

In other words, in a process of multi-screen collaboration between the electronic device 100 and the electronic device 200, a user may adjust the size of the multi-screen collaboration window displayed on the electronic device 200. The user may adjust the size of the multi-screen collaboration window to a plurality of different sizes. A length-width ratio of the multi-screen collaboration window can be changed. After the size of the multi-screen collaboration window changes, a layout of the application interface displayed in the multi-screen collaboration window may also be adaptively adjusted to adapt to the multi-screen collaboration window whose size changes.

In this way, the user may better allocate, by adjusting the size of the multi-screen collaboration window, appropriate display areas to one or more multi-screen collaboration windows and one or more windows displayed when the electronic device 200 runs another application, to improve screen space utilization of the electronic device 200. The user may adjust the size of the multi-screen collaboration window to a desired size. This can improve user experience of performing multi-screen collaboration by using the device.

The following specifically describes the communication system 10 shown in FIG. 1.

Both the electronic device 100 and the electronic device 200 in the communication system 10 may be electronic devices that carry iOS^{®}, Android^{®}, Windows^{®}, or another operating system. For example, the electronic device 100 may be an electronic device like a mobile phone or a wearable device. The electronic device 200 may be an electronic device with a display function, like a PC, a tablet computer, a mobile phone, a vehicle-mounted device, an augmented reality (augmented reality, AR)/virtual display (virtual reality, VR) device, a notebook computer, an ultra-mobile personal computer (ultra-mobile personal computer, UMPC), a netbook, a personal digital assistant (personal digital assistant, PDA), a display, or a television. Specific types of the electronic device 100 and the electronic device 200 are not limited in embodiments of this application.

In some embodiments, the electronic device 100 and the electronic device 200 may be electronic devices of a same type. Alternatively, the electronic device 100 and the electronic device 200 may be electronic devices of different types. In subsequent embodiments of this application, an example in which the electronic device 100 is a mobile phone, the electronic device 200 is a PC, and one or more windows for presenting an interface of the mobile phone are displayed on the PC is specifically used for description. In this case, the multi-screen collaboration window may also be referred to as a mobile phone window.

A communication connection may be established between the electronic device 100 and the electronic device 200. The communication connection may include a plurality of different connection manners such as a wired connection or a wireless connection.

For example, the wired connection between the electronic device 100 and the electronic device 200 may be a connection through a universal serial bus (universal serial bus, USB) data cable. Alternatively, the wireless connection between the electronic device 100 and the electronic device 200 may be implemented by using a wireless fidelity (wireless fidelity, Wi-Fi) connection method. Alternatively, both the electronic device 100 and the electronic device 200 may support a near field communication (near field communication, NFC) technology. With the help of NFC, the electronic device 100 and the electronic device 200 may be connected in proximity by using a "OneHop" function. Alternatively, the electronic device 100 and the electronic device 200 may establish a Bluetooth communication connection by using a Bluetooth code scanning connection function. Alternatively, as communication technologies develop, a communication bandwidth and a communication rate gradually increase. High-rate communication manners such as a 5th generation (5th generation, 5G) mobile communication technology and a 6th generation (6th generation, 6G) mobile communication technology are gradually popularized. The electronic device 100 and the electronic device 200 may establish a communication connection by using the 5G mobile communication technology, the 6G mobile communication technology, or the like. A communication connection manner between the electronic device 100 and the electronic device 200 is not limited in embodiments of this application.

After the communication connection is established between the electronic device 100 and the electronic device 200, a multi-screen collaboration function may be implemented. The electronic device 200 may display, on a screen, a window (namely, a multi-screen collaboration window) for presenting an interface of the electronic device 100. The electronic device 100 and the electronic device 200 may perform data transmission through the communication connection, to support the electronic device 200 in displaying the multi-screen collaboration window.

For example, in some embodiments, data transmitted between the electronic device 100 and the electronic device 200 may include related data used to display an application interface in the multi-screen collaboration window. For example, content in the multi-screen collaboration window displayed by the electronic device 200 on the screen is a mirror image of the electronic device 100. That is, the content displayed in the multi-screen collaboration window may be consistent with content displayed on the screen of the electronic device 100. When the content displayed on the screen of the electronic device 100 changes, the electronic device 100 may encode a changed user interface, and transmit an encoded user interface to the electronic device 200. Then, the electronic device 200 may display the changed user interface in the multi-screen collaboration window. In this way, the content displayed in the multi-screen collaboration window may be consistent with the content displayed on the screen of the electronic device 100.

In some embodiments, the transmitted data may further include an intention instruction. The intention instruction may include an operation instruction corresponding to a touch event (touch event), for example, an operation instruction for an event like starting an application, closing an application, moving a control, dragging a control, tapping a control, double-tapping a control, right-clicking a control, or scaling a multi-screen collaboration window. For example, content in the multi-screen collaboration window displayed by the electronic device 200 on the screen is a mirror image of the electronic device 100. The electronic device 200 detects an operation of starting an XX application in the multi-screen collaboration window. The XX application may be an application in the electronic device 100. The electronic device 200 may send an operation instruction for starting the XX application to the electronic device 100. The electronic device 100 may start the XX application, and display a user interface of the XX application on the screen. The electronic device 100 may encode the user interface of the XX application, and transmit an encoded user interface to the electronic device 200. Then, the electronic device 200 may display the user interface of the XX application in the multi-screen collaboration window. In this way, the user may perform an operation in the multi-screen collaboration window to implement reverse control on the electronic device 100, so that the content displayed in the multi-screen collaboration window is consistent with the content displayed on the screen of the electronic device 100. For another example, the electronic device 200 detects an operation of scaling the multi-screen collaboration window on the multi-screen collaboration window, and may send, to the electronic device 100, an identifier of the multi-screen collaboration window scaled by the operation and a size obtained after the scaling. The electronic device 100 may determine, based on the identifier of the multi-screen collaboration window, an application displayed in the multi-screen collaboration window, and adjust, based on the size obtained after the scaling, a layout of a user interface of the application displayed in the multi-screen collaboration window. The electronic device 100 may encode the user interface of the application whose layout is adjusted, and transmit an encoded user interface to the electronic device 200. Then, the electronic device 200 may display, in the multi-screen collaboration window, an application interface that adapts to the multi-screen collaboration window obtained after the size adjustment.

In some embodiments, the transmitted data may further include a resolvable data format defined between the electronic device 100 and the electronic device 200, and the like. For example, the related data used to display an application interface in the multi-screen collaboration window may be transmitted based on a format of a video stream. A rule for encoding and decoding a video stream may be defined between the electronic device 100 and the electronic device 200. The electronic device 100 may encode the video stream, and send an encoded video stream to the electronic device 200. The encoded video stream may include a data format used to decode the video stream. When receiving the encoded video stream, the electronic device 200 may decode the video stream according to the rule that is for decoding the video stream and defined between the electronic device 200 and the electronic device 100, to obtain the video stream, so as to display, in the multi-screen collaboration window, a user interface of an application in the electronic device 100.

A type of data transmitted by the electronic device 100 and the electronic device 200 in a multi-screen collaboration process is not limited in embodiments of this application.

The following describes a diagram of a structure of an electronic device 100 according to an embodiment of this application.

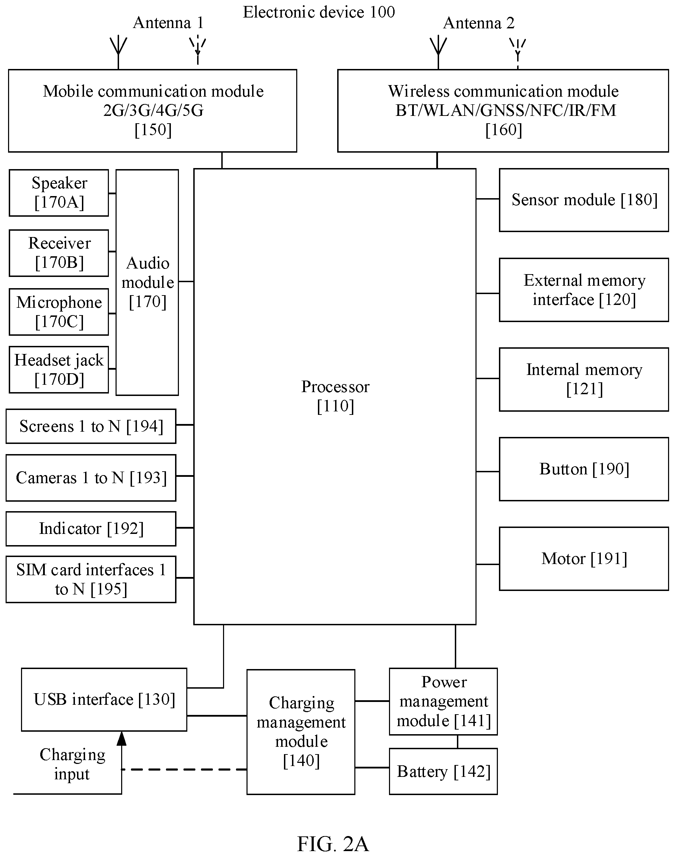

**FIG. 2A** **is a diagram of an example of a structure of an electronic device 100 according to an embodiment of this application.**

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a screen 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on instruction operation code and a timing signal, and complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, may be configured to transmit data between the electronic device 100 and a peripheral device, or may be configured to connect to a headset, to play audio through the headset. The charging management module 140 is configured to receive a charging input from a charger. The charger may be a wireless charger or a wired charger. The charging management module 140 may supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

The electronic device 100 implements a display function by using the GPU, the screen 194, the application processor, and the like. The GPU is a microprocessor for image processing, and is connected to the screen 194 and the application processor. The GPU is configured to perform mathematical and geometric calculation for graphics rendering.

The screen 194 is configured to display an image, a video, and the like. In some embodiments, the electronic device 100 may include one or N screens 194, where N is a positive integer greater than 1.

The electronic device 100 may implement a photographing function by using the ISP, the camera 193, the video codec, the GPU, the screen 194, the application processor, and the like.

The ISP is configured to process data fed back by the camera 193. For example, during photographing, a shutter is opened, light is transferred to a camera photosensitive element through a lens, an optical signal is converted into an electrical signal, and the camera photosensitive element transfers the electrical signal to the ISP for processing, to convert the electrical signal into an image visible to a naked eye.

The camera 193 is configured to capture a static image or a video. In some embodiments, the electronic device 100 may include one or N cameras 193, where N is a positive integer greater than 1.

The digital signal processor is configured to process a digital signal, and may further process another digital signal in addition to a digital image signal. For example, when the electronic device 100 selects a frequency, the digital signal processor is configured to perform Fourier transform on frequency energy and the like.

The NPU is a neural-network (neural-network, NN) computing processor. The NPU quickly processes input information with reference to a structure of a biological neural network, for example, a transfer mode between human brain neurons, and may further continuously perform self-learning. The NPU can implement applications such as intelligent cognition of the electronic device 100. For example, image recognition, facial recognition, speech recognition, and a text understanding.

The external memory interface 120 may be configured to connect to an external memory card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code, where the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function and an image playing function), and the like. The data storage area may store data (for example, audio data or an address book) and the like created when the electronic device 100 is used. In addition, the internal memory 121 may include a high speed random access memory, and may further include a nonvolatile memory, for example, at least one magnetic disk storage device, a flash storage device, or a universal flash storage (universal flash storage, UFS).

The electronic device 100 may implement an audio function by using the audio module 170, the speaker 170A, the receiver 170B, the microphone 170C, the headset jack 170D, the application processor, and the like. For example, playing music, and recording.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker 170A, also referred to as a "horn", is configured to convert an audio electrical signal into a sound signal. The receiver 170B, also referred to as an "earpiece", is configured to convert an audio electrical signal into a sound signal. The microphone 170C, also referred to as a "mike" or a "voice tube", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging state and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network by using the SIM card, to implement functions such as a call and data communication. In some embodiments, the electronic device 100 uses an eSIM, namely, an embedded SIM card. The eSIM card may be embedded in the electronic device 100, and cannot be separated from the electronic device 100.

FIG. 2A is a diagram of a possible hardware structure in a case in which the electronic device 100 is a mobile phone. When the electronic device 200 is a PC, the electronic device 200 may have all or a part of the hardware structure shown in FIG. 2A, or include more hardware structures than those in FIG. 2A. This is not limited in embodiments of this application.

The following describes a diagram of a structure of the electronic device 200 according to an embodiment of this application.

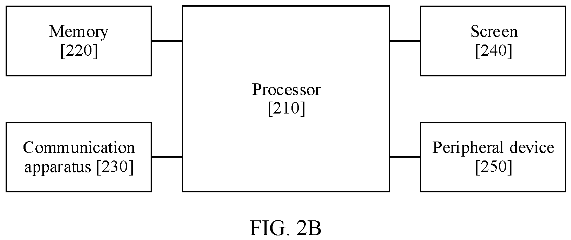

**FIG. 2B** **is a diagram of an example of a structure of the electronic device 200 according to an embodiment of**

### this application.

As shown in FIG. 2B, the electronic device 200 may include at least a processor 210, a memory 220, a communication apparatus 230, and a screen 240. In some embodiments, the electronic device 200 may further include a peripheral device 250. The peripheral device 250 may include but is not limited to one or more of the following: a mouse, a keyboard, a speaker, and a microphone.

It may be understood that the structure of the electronic device 200 shown in FIG. 2B does not constitute a limitation on the electronic device 200. In some embodiments of this application, the electronic device 200 may include more or fewer components than those shown in FIG. 2B, or a combination of a part of the components, or splits from a part of the components, or an arrangement of different components. The components shown in FIG. 2B may be implemented by using hardware, software, or a combination of software and hardware.

The processor 210 may include one or more processing units, and the processor 210 may be configured to control and manage an action of the electronic device 200.

The memory 220 may be configured to store program code and data.

The communication apparatus 230 may be configured to perform communication between internal modules of the electronic device 200, communication between the electronic device 200 and another device (for example, the electronic device 100), or the like.

For example, the electronic device 200 may communicate with another device in a wired connection manner. The communication apparatus 230 may include an interface, for example, a USB interface. For the USB interface, refer to the description of the USB interface 130 in FIG. 2A. In some embodiments, the communication apparatus 230 may include one or more of the following: an audio component, a radio frequency circuit, a Bluetooth chip, a Wi-Fi chip, and an NFC module, to implement interaction between the electronic device 200 and another device.

The screen 240 may be configured to display an image, a video, and the like. For example, the screen 240 may be configured to display a window for presenting an interface of the electronic device 100. The screen 240 may also be referred to as a "screen."

In this embodiment of this application, the processor 210 may execute computer-executable instructions stored in the memory 220, so that the electronic device 200 and the electronic device 100 form a communication system that communicates with each other, to further adjust a size of a multi-screen collaboration window, on the screen 240, for presenting the interface of the electronic device 100.

A software system of the electronic device 100 may be a software system like a layered architecture of an Android^{®} system, a Harmony OS (Harmony OS) architecture, an event-driven architecture, a microkernel architecture, a microservice architecture, or a cloud architecture. In this embodiment of this application, a layered architecture of an Android^{®} system is used as an example to illustrate a software structure of the electronic device 100.

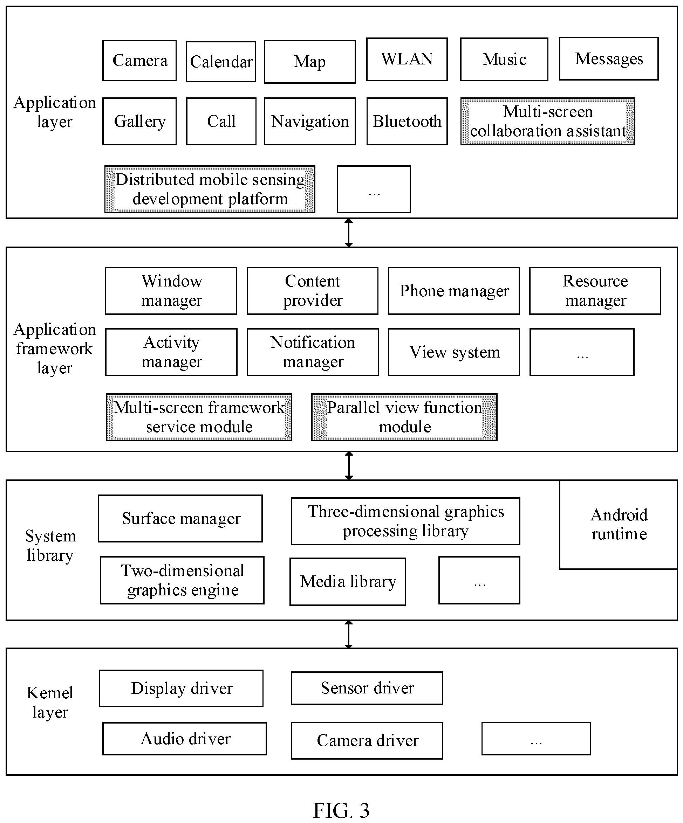

**FIG. 3** **is a block diagram of an example of a software structure of the electronic device 100 according to an embodiment of this application.**

The layered architecture divides software into layers, and each layer has a clear role and responsibility. The layers communicate with each other through software interfaces. In some embodiments, the Android system is divided into four layers: an application layer, an application framework layer, an Android runtime (Android runtime) and a system library, and a kernel layer.

The application layer may include a series of application packages.

As shown in FIG. 3, the application packages may include applications such as Camera, Gallery, Calendar, Call, Map, Navigation, WLAN, Bluetooth, Music, Messages, Multi-screen collaboration assistant, and Distributed mobile sensing development platform (distributed mobile sensing development platform, DMSDP).

Multi-screen collaboration assistant may be used to implement a multi-screen collaboration function between the electronic device 100 and another device (for example, the electronic device 200). By using Multi-screen collaboration assistant, the electronic device 100 may display, on a screen of another device, a user interface of an application run by the electronic device 100. Multi-screen collaboration assistant may also be referred to as a PC assistant or the like. DMSDP can be used to manage a display (display) corresponding to a multi-screen collaboration window. The display corresponding to the multi-screen collaboration window may be used to render, draw, and present content of an interface of the electronic device 100. For example, DMSDP may manage a size of the display, and a layout of content rendered and drawn on the display. In some embodiments, DMSDP may be further used to provide a distributed component virtualization capability and a capability of calling a CAST+ interface to perform projection. The distributed component virtualization capability may be a capability of constructing a component virtualization platform to virtualize various components (such as a camera, a screen, a microphone, and a speaker) of another device into components of a local device for extended use, and a capability of sharing a component of the device with the another device for use. For example, the distributed component virtualization capability may include an audio virtualization capability. The audio virtualization capability may virtualize a speaker of another device (for example, the electronic device 200) into a component of a local device, to transmit an audio on a side of the electronic device 100 to the electronic device 200 for playing. The CAST+ interface may be an interface used to use a cast engine (cast engine). The cast engine can implement fast, stable, and low-latency collaboration between a mobile phone and a large-screen device (like a tablet computer or a PC), and has a strong anti-interference capability in terms of security and stability. The cast engine can provide high-quality experience for a user in a multi-screen collaboration scenario. The cast engine may provide functions such as video stream transmission and reverse control.

For example, the electronic device 100 performs multi-screen collaboration with the electronic device 200. The electronic device 100 may virtualize, by using a video virtualization capability provided by DMSDP, a screen of the electronic device 200 into a component of a local device, to display, on the screen of the electronic device 200, a user interface of an application run by the electronic device 100. The electronic device 100 may encode an image of an application interface into a video stream, and send the video stream to the electronic device 200 by using the cast engine. The electronic device 200 may send, to the electronic device 100 by using the cast engine, an instruction corresponding to an operation detected in the multi-screen collaboration window. Then, the electronic device 100 may execute the instruction corresponding to the operation. In this way, the user can implement reverse control on the electronic device 100 on the multi-screen collaboration window displayed on the electronic device 200.

The application framework layer provides an application programming interface (application programming interface, API) and a programming framework for the application at the application layer. The application framework layer includes some predefined functions.

As shown in FIG. 3, the application framework layer may include a window manager, a content provider, a view system, a phone manager, a resource manager, a notification manager, an activity manager, a multi-screen framework service module, a parallel view function module, and the like.

The window manager is configured to manage a window program. The window manager can obtain a size of a screen, determine whether there is a status bar, lock a screen, and capture a screen.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views, for example, include a display interface of a message notification icon, and may include a view for displaying a text and a view for displaying a picture.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be used to convey a notification type message. The message may automatically disappear after a short pause without user interaction. For example, the notification manager is used to notify download completion, a message notification, and the like. The notification manager may alternatively be a notification that appears in a top of a status bar in a system in a form of a graph or a scroll bar text, for example, a notification of an application run on a background or a notification that appears on a screen in a form of a dialog window. For example, text information is prompted in the status bar, a prompt tone is produced, the electronic device vibrates, or an indicator light blinks.

The activity manager is responsible for managing an activity (activity), and is responsible for starting, switching, and scheduling each component in a system, and managing and scheduling an application. The activity manager can be invoked by an upper-layer application to start a corresponding activity.

The multi-screen framework service module may be used to manage a task stack (task stack) of an application, and perform image synthesis, encoding, and the like. One application usually includes a plurality of activities. The task stack may be used to store an activity started by the electronic device 100. The task stack is a stack structure, and has a last-in first-out feature. One application may correspond to at least one task stack. When the electronic device 100 starts an application, the electronic device 100 may allocate a task stack to the application. Each time an activity of an application is newly started, the electronic device 100 may add an activity component to a task stack corresponding to the application. Each time an activity of an application is exited, the electronic device 100 may reduce an activity component from a task stack corresponding to the application. In this way, the electronic device 100 may determine, by using the multi-screen framework service module, a life cycle of each activity in an application and an interface corresponding to a specific activity that is displayed in the multi-screen collaboration window. In addition, the electronic device 100 may perform, by using the multi-screen framework service module, an operation like synthesis or encoding on an image of an application interface, to obtain a video stream used to present the application interface. Then, the electronic device 100 may send the video stream to another electronic device, to implement a multi-screen collaboration function.

The multi-screen framework service module may alternative be a layer located between the application layer and the application framework layer, and is not limited to being classified into the application framework layer. The multi-screen framework service module may also be referred to as a "multi-screen framework service layer". This is not limited in this embodiment of this application.

In some embodiments, the multi-screen framework service module may further provide a window management function, a window coordinate synchronization function, and the like. The window management function may include managing a size of a to-be-displayed window on the electronic device 100, determining content in the to-be-displayed window, and the like. The to-be-displayed window may be the multi-screen collaboration window that is displayed on the electronic device 200 for presenting an interface of the electronic device 100 in a multi-screen collaboration scenario. It may be understood that the content in the to-be-displayed window may include an interface that is being displayed on a screen of the electronic device 100, and may further include interfaces of one or more applications run in a background of the electronic device 100. The window coordinate synchronization function may be obtaining coordinates of the to-be-displayed window on a screen of a projected device (for example, the electronic device 200) in a multi-screen collaboration scenario. The projected device may be a device that displays a multi-screen collaboration window in the multi-screen collaboration scenario.

The parallel view function module may be used to provide a parallel view function, and display an application in a parallel view style. The parallel view style may indicate a style in which two windows in an application are simultaneously displayed on a left side and a right side of a screen. The two windows in the application may be used to respectively display interfaces corresponding to two independent activities in the application. For example, that a shopping application is displayed in a parallel view style may be that two windows of the shopping application are simultaneously displayed on a left side and a right side of a screen. The window displayed on the left side of the screen may be used to display a user interface of a commodity information list in the shopping application. The window displayed on the right side of the screen may be used to display a user interface of detailed information about a commodity in the shopping application.

In some embodiments, the application framework layer may further include a message manager. The message manager may be used to perform message transfer between different applications in the electronic device 100, perform message transfer between the electronic device 100 and another device (for example, the electronic device 200), and the like. The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. In some embodiments, the kernel layer may further include a Bluetooth driver, a Wi-Fi driver, an NFC driver, and the like, so that the electronic device 100 communicates with another device. FIG. 3 is a diagram of a possible software structure of the electronic device 100. The electronic device 200 may have all or some software modules shown in FIG. 3, or include more software modules than those in FIG. 3. This is not limited in this embodiment of this application.

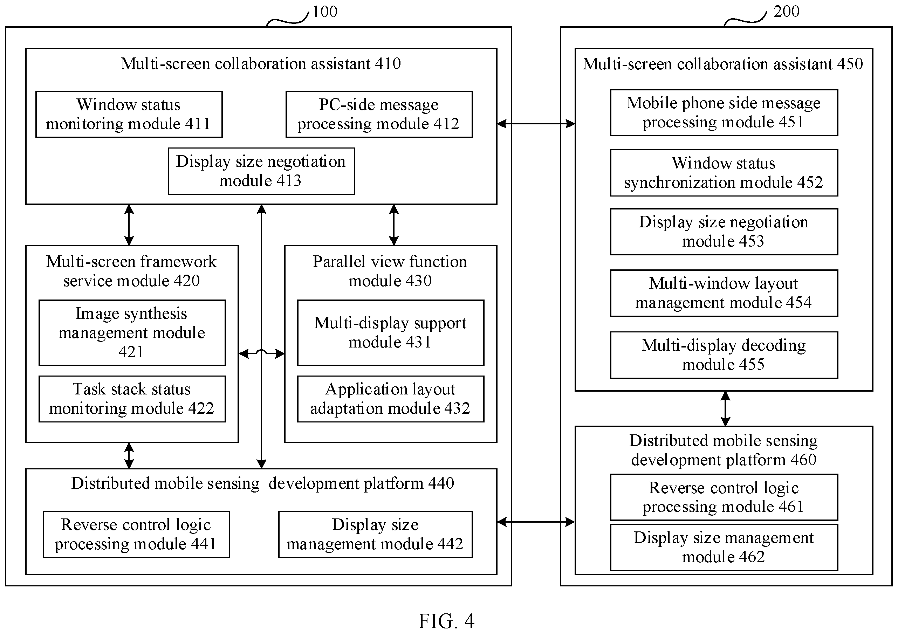

**FIG. 4** **is a diagram of an example of another architecture of the communication system 10 according to an embodiment of this application.**

As shown in FIG. 4, the communication system 10 may include the electronic device 100 and the electronic device 200. The electronic device 100 may include a multi-screen collaboration assistant 410, a multi-screen framework service module 420, a parallel view function module 430, and a distributed mobile sensing development platform (distributed mobile sensing development platform, DMSDP) 440. The electronic device 200 may include a multi-screen collaboration assistant 450 and a DMSDP 460.

It can be learned from FIG. 4 that the multi-screen collaboration assistant may be installed on each of the electronic device 100 and the electronic device 200. The electronic device 100 and the electronic device 200 may implement, by using the multi-screen collaboration assistant, multi-screen collaboration and a function of adjusting a size of a multi-screen collaboration window. In some embodiments, the multi-screen collaboration assistant 410 installed in the electronic device 100 and the multi-screen collaboration assistant 450 installed in the electronic device 200 may be a same application. In some other embodiments, the multi-screen collaboration assistant 410 installed in the electronic device 100 and the multi-screen collaboration assistant 450 installed in the electronic device 200 may be different applications. For example, the multi-screen collaboration assistant 410 may be an application that adapts to the electronic device 100 (namely, a device whose interface is displayed on a screen of another device in a multi-screen collaboration scenario). The multi-screen collaboration assistant 410 may also be referred to as a PC assistant. The multi-screen collaboration assistant 450 may be an application that adapts to the electronic device 200 (namely, a device that displays an interface of another device on a screen in a multi-screen collaboration scenario). The multi-screen collaboration assistant 450 may also be referred to as a PC manager, an EMUI desktop, or the like. In some embodiments, the multi-screen collaboration assistant 410 may be an application preset in the electronic device 100, and may not have a corresponding desktop application icon. The multi-screen collaboration assistant 450 may have a corresponding desktop application icon in the electronic device 200. Implementation methods of the multi-screen collaboration assistant 410 and the multi-screen collaboration assistant 450 are not limited in this embodiment of this application.

In the electronic device 100, the multi-screen collaboration assistant 410 may be responsible for functions such as negotiating a size of a multi-screen collaboration window with the electronic device 200, and processing message exchange between the electronic device 100 and the electronic device 200. The multi-screen collaboration assistant 410 may include a window status monitoring module 411, a PC-side message processing module 412, and a display size negotiation module 413.

The window status monitoring module 411 may be used to monitor a status of the multi-screen collaboration window displayed on the electronic device 200. For example, the window status monitoring module 411 may monitor whether the multi-screen collaboration window is in a minimized state. When the multi-screen collaboration window is in the minimized state, the electronic device 200 may display, on a screen, a control used to identify the multi-screen collaboration window, so that the user displays the multi-screen collaboration window on the screen of the electronic device 200 again by using the control. When detecting that the multi-screen collaboration window is in the minimized state, the electronic device 100 may stop transmitting, to the electronic device 200, a video stream used to display an image in the multi-screen collaboration window. For another example, the window status monitoring module 411 may further monitor whether the multi-screen collaboration window is in a maximized state, whether the multi-screen collaboration window is closed, whether an application displayed in the multi-screen collaboration window changes, and the like.

The PC-side message processing module 412 may be used to process a message from the electronic device 200, for example, an operation instruction corresponding to an operation performed on the multi-screen collaboration window, an identifier of the multi-screen collaboration window, a size of the multi-screen collaboration window, or coordinates of the multi-screen collaboration window on a screen of the electronic device 200.

The display size negotiation module 413 may be used to negotiate, with the electronic device 200, a size of a display corresponding to the multi-screen collaboration window. The multi-screen collaboration window may include an area used to display an interface of the electronic device 100, and a window control area used to display a control (for example, a minimization control, a maximization control, or a close control) for controlling the multi-screen collaboration window. The size of the display corresponding to the multi-screen collaboration window may be a size of an area that is in the multi-screen collaboration window and that is used to display an interface of the electronic device 100. It may be understood that, when the user adjusts the size of the multi-screen collaboration window, the size of the display corresponding to the multi-screen collaboration window also changes accordingly.

The multi-screen framework service module 420 may be used to manage a task stack (task stack) of an application, and perform image synthesis, encoding, and the like. The multi-screen framework service module 420 may include an image synthesis management module 421 and a task stack status monitoring module 422. The image synthesis management module 421 may be used to perform an operation like synthesis or encoding on an image of an application interface to obtain a video stream used to present the application interface. The application interface may include a user interface of an application run in a foreground of the electronic device 100 (namely, a user interface displayed on the screen of the electronic device 100), and may further include a user interface of an application run in a background of the electronic device 100. The task stack status monitoring module 422 may be used to manage a task stack of an application. For details of the multi-screen framework service module 420, refer to the descriptions of the multi-screen framework service module in FIG. 3. Details are not described herein again.

The parallel view function module 430 may be used to provide a parallel view function, and display an application in a parallel view style. The parallel view function module 430 may include a multi-display support module 431 and an application layout adaptation module 432.

The multi-display support module 431 may be used to provide a capability of displaying an application in a parallel view style on a plurality of displays. In other words, in a multi-screen collaboration scenario, the electronic device 200 may display a plurality of multi-screen collaboration windows. All application interfaces in the plurality of multi-screen collaboration windows may be presented in a parallel view style.

For example, two multi-screen collaboration windows are displayed on the screen of the electronic device 200: a multi-screen collaboration window 1 and a multi-screen collaboration window 2. The multi-screen collaboration window 1 is used to display a user interface of a shopping application in the electronic device 100. A user interface of a commodity information list in the shopping application may be displayed on a left side of the multi-screen collaboration window 1, and a user interface of detailed information about a commodity in the shopping application may be displayed on a right side of the multi-screen collaboration window 1. The user interfaces displayed on the left side and the right side of the multi-screen collaboration window 1 may be independent, and the user may respectively perform operations on related controls on the two user interfaces. The multi-screen collaboration window 2 is used to display a user interface of a video application in the electronic device 100. A user interface of a video list in the video application may be displayed on a left side of the multi-screen collaboration window 2, and a user interface of playing a video in the video application may be displayed on a right side of the multi-screen collaboration window 2. The user interfaces displayed on the left side and the right side of the multi-screen collaboration window 2 may be independent, and the user may respectively perform operations on related controls on the two user interfaces.

The application layout adaptation module 432 may be used to adjust a layout of an application interface based on a size of a display, so that the layout of the application interface can adapt to the display displayed in a parallel view style.

The DMSDP 440 may be used to provide a capability of managing a display corresponding to a multi-screen collaboration window, a distributed component virtualization capability, a capability of calling a CAST+ interface to perform projection, and the like. The DMSDP 440 may include a reverse control logic processing module 441 and a display size management module 442. The reverse control logic processing module 441 may be used to implement reverse control on the electronic device 100 by the user by using the multi-screen collaboration window displayed on the electronic device 200. The display size management module 442 may be used to manage a size of a display corresponding to each multi-screen collaboration window, for example, update a size of a display, so that the electronic device 100 adjusts a layout of an application interface on the display whose size is updated. For the DMSDP 440, refer to the description of the DMSDP shown in FIG. 3. Details are not described herein again.

Not limited to the software modules included in the electronic device 100 shown in FIG. 4, the electronic device 100 may further include more software modules. For details, refer to the block diagram of the software structure of the electronic device 100 shown in FIG. 3.

In the electronic device 200, the multi-screen collaboration assistant 450 may be responsible for functions such as negotiating a size of a multi-screen collaboration window with the electronic device 100, processing message exchange between the electronic device 100 and the electronic device 200, displaying an interface of the electronic device 100 in a multi-screen collaboration window, and decoding a video stream. The multi-screen collaboration assistant 450 may include a mobile phone side message processing module 451, a window status synchronization module 452, a display size negotiation module 453, a multi-window layout management module 454, and a multi-display decoding module 455.

The mobile phone side message processing module 451 may be used to process a message from the electronic device 100, for example, a video stream used to display an interface of the electronic device 100, a name and/or an icon of an application displayed in a multi-screen collaboration window, or control information of a multi-screen collaboration window (for example, whether an interface of the electronic device 100 displayed in the multi-screen collaboration window can be rotated). Content of the message is not limited in this embodiment of this application.

The window status synchronization module 452 may be used to synchronize a status (like a size, a display position, displayed content, or whether to minimize or maximize) of the multi-screen collaboration window to the electronic device 100. In this way, the electronic device 100 may determine a layout of content displayed in the multi-screen collaboration window based on the status of the multi-screen collaboration window, so that the content displayed in the multi-screen collaboration window adapts to the multi-screen collaboration window.

The display size negotiation module 453 may be used to negotiate, with the electronic device 100, a size of a display corresponding to the multi-screen collaboration window.

The multi-window layout management module 454 may be used to: when a plurality of multi-screen collaboration windows are opened, manage display positions of the plurality of multi-screen collaboration windows on a screen of the electronic device 200. For example, a multi-screen collaboration window is displayed on the screen of the electronic device 200. In response to an operation of adding one multi-screen collaboration window, the electronic device 200 may display two multi-screen collaboration windows on the screen. A display position of the newly added multi-screen collaboration window on the screen of the electronic device 200 may be determined by the multi-window layout management module 454. For example, the multi-window layout management module 454 may display the newly added multi-screen collaboration window on a right side of the existing multi-screen collaboration window, and the two multi-screen collaboration windows do not block each other on the screen.

The multi-display decoding module 455 may be used to provide a capability of decoding a plurality of video streams. The plurality of video streams may be separately used to render corresponding images on displays corresponding to different multi-screen collaboration windows. In other words, the electronic device 200 may simultaneously display a plurality of multi-screen collaboration windows. Each multi-screen collaboration window may correspond to one display. The electronic device 100 may encode, into a video stream, an image corresponding to a user interface of an application. In this case, for user interfaces of a plurality of applications that are displayed in the plurality of multi-screen collaboration windows, the electronic device 100 may generate a plurality of video streams. The electronic device 100 may send the plurality of video streams to the electronic device 200. Then, the electronic device 200 may decode the plurality of video streams by using the multi-display decoding module 455, to display user interfaces of different applications in the electronic device 100 on displays corresponding to the plurality of multi-screen collaboration windows.

The DMSDP 460 may be used to provide a capability of managing a display corresponding to a multi-screen collaboration window, a distributed component virtualization capability, a capability of calling a CAST+ interface to perform projection, and the like. The DMSDP 460 may include a reverse control logic processing module 461, and a display size management module 462. For the DMSDP 460, refer to the foregoing description of the DMSDP 440. Not limited to the software modules included in the electronic device 200 shown in FIG. 4, the electronic device 200 may further include more software modules. A software structure of the electronic device 200 may be a software system like a Windows^{®}\ system, a Linux^{®} system, or a Mac^{®} system. This is not limited in this embodiment of this application.

It may be understood that division of the software modules in the electronic device 100 and the electronic device 200 shown in FIG. 4 is merely an example for description of embodiments of this application. The software modules in the electronic device 100 and the electronic device 200 may alternatively have other division manners, and all the software modules fall within the protection scope of this application, provided that they are based on a same inventive idea provided in this application.

Interaction between the software modules of the electronic device 100 and the electronic device 200 in a process of adjusting the size of the multi-screen collaboration window is described herein.

For example, the multi-screen collaboration assistant 450 of the electronic device 200 may detect an operation of adjusting the size of the multi-screen collaboration window. The multi-screen collaboration assistant 450 may send an identifier of the multi-screen collaboration window whose size is adjusted and the adjusted size to the multi-screen collaboration assistant 410 of the electronic device 100. Data transmission between the multi-screen collaboration assistant 450 and the multi-screen collaboration assistant 410 may be completed by using communication apparatuses of the electronic device 100 and the electronic device 200. An implementation of the data transmission is not limited in embodiments of this application. After receiving the identifier of the multi-screen collaboration window and the adjusted size, the multi-screen collaboration assistant 410 may determine an application displayed in the multi-screen collaboration window indicated by the identifier and a size of a display corresponding to the multi-screen collaboration window. The multi-screen collaboration assistant 410 may indicate the DMSDP 440 to adjust the size of the display corresponding to the multi-screen collaboration window. Then, the DMSDP 440 may invoke the multi-screen framework service module 420 to adjust the size of the display corresponding to the multi-screen collaboration window. The multi-screen framework service module 420 may adjust, based on the adjusted size, a layout of an application interface displayed in the multi-screen collaboration window, so that the layout of the application interface adapts to the display whose size is adjusted. The multi-screen framework service module 420 may encode the application interface obtained after the layout adjustment, to obtain a video stream, and send the video stream to the DMSDP 440. The DMSDP 440 may send the video stream to the DSMDP 460 of the electronic device 200. The DMSDP 460 may send the video stream to the multi-screen collaboration assistant 450. The multi-screen collaboration assistant 450 of the electronic device 200 may display the multi-screen collaboration window whose size is adjusted, and display a corresponding application interface on a display of the multi-screen collaboration window based on the received video stream.

In addition, in addition to the display, the multi-screen collaboration window may further include a window control area. The window control area may be used to display a control used to control the multi-screen collaboration window. In some embodiments, in a multi-screen collaboration scenario, in addition to sending of a video stream to the electronic device 200 by the electronic device 100, the multi-screen collaboration assistant 410 in the electronic device 100 may further send control information of the multi-screen collaboration window to the multi-screen collaboration assistant 450 in the electronic device 200. For example, an interface of the electronic device 100 displayed in the multi-screen collaboration window may be rotated, that is, switching between a portrait display state and a landscape display state is supported. The multi-screen collaboration assistant 410 may send, to the multi-screen collaboration assistant 450, a message indicating that the multi-screen collaboration window is rotatable. Based on the message, the multi-screen collaboration assistant 450 may display a rotation control in the window control area of the multi-screen collaboration window, so that the user performs a rotation operation on the multi-screen collaboration window.

In some embodiments, when a message that is sent by the multi-screen collaboration assistant 450 and that indicates a size change of a multi-screen collaboration window is received, the multi-screen collaboration assistant 410 may determine whether an application displayed in the multi-screen collaboration window supports a parallel view function, and whether an adjusted size is suitable for the application to be displayed in a parallel view style. When determining that the application displayed in the multi-screen collaboration window supports the parallel view function, and the adjusted size is suitable for the application to be displayed in the parallel view style, the multi-screen collaboration assistant 410 may indicate the parallel view function module 430 to adjust a layout of the application displayed in the multi-screen collaboration window. The parallel view function module 430 may adjust a layout of an application interface based on a display whose size is adjusted, so that the application is displayed in a parallel view style and the layout of the application interface adapts to the display whose size is adjusted. Then, the parallel view function module 430 may send the application interface after the layout adjustment to the multi-screen framework service module 420. The multi-screen framework service module 420 may encode the application interface displayed in a parallel view style to obtain a video stream, and send the video stream to the DMSDP 460 of the electronic device 200 by using the DMSDP 440. Further, the DMSDP 460 may send the video stream to the multi-screen collaboration assistant 450. In this way, the electronic device 200 may display, in the multi-screen collaboration window whose size is adjusted, the application interface having the parallel view style.

It should be noted that the multi-screen collaboration window whose layout adaptation size is adjusted for the application interface may represent a display corresponding to the multi-screen collaboration window whose layout adaptation size is adjusted for the application interface.

It can be learned from the communication system shown in FIG. 4 that, in a process of multi-screen collaboration between the electronic device 100 and the electronic device 200, the user may adjust the size of the multi-screen collaboration window displayed on the electronic device 200. The user may adjust the size of the multi-screen collaboration window to a plurality of different sizes. A length-width ratio of the multi-screen collaboration window can be changed. After the size of the multi-screen collaboration window changes, a layout of an application interface displayed in the multi-screen collaboration window may also be adaptively adjusted to adapt to the multi-screen collaboration window whose size changes. In this way, the user may better allocate, by adjusting the size of the multi-screen collaboration window, appropriate display areas to one or more multi-screen collaboration windows and one or more windows displayed when the electronic device 200 runs another application, to improve screen space utilization of the electronic device 200. The user may adjust the size of the multi-screen collaboration window to a desired size. This can improve user experience of performing multi-screen collaboration by using the device.

The following embodiments describe, based on the communication system including the electronic device 100 and the electronic device 200, a window size adjustment method provided in embodiments of this application. The following provides specific descriptions with reference to the accompanying drawings and application scenarios.

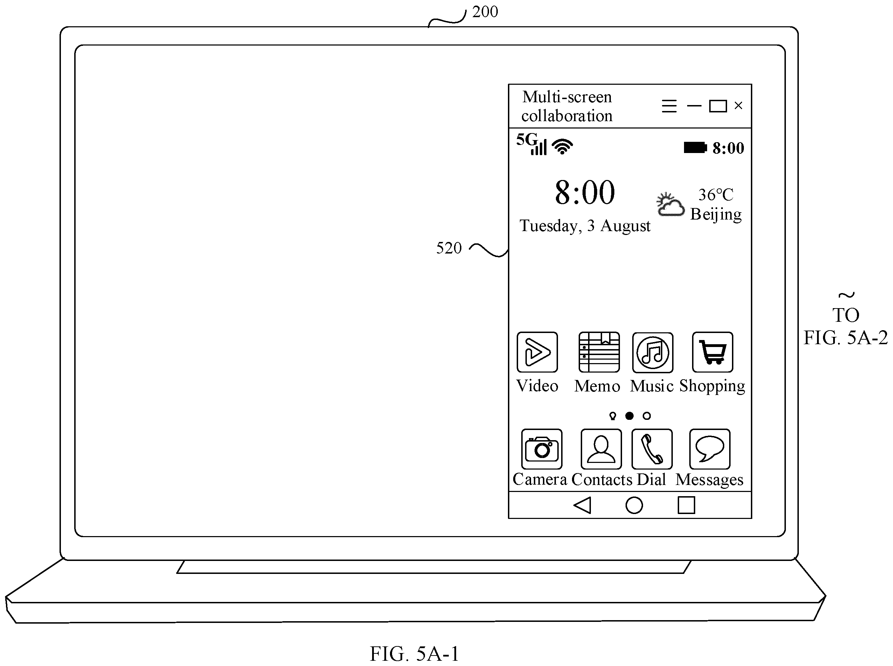

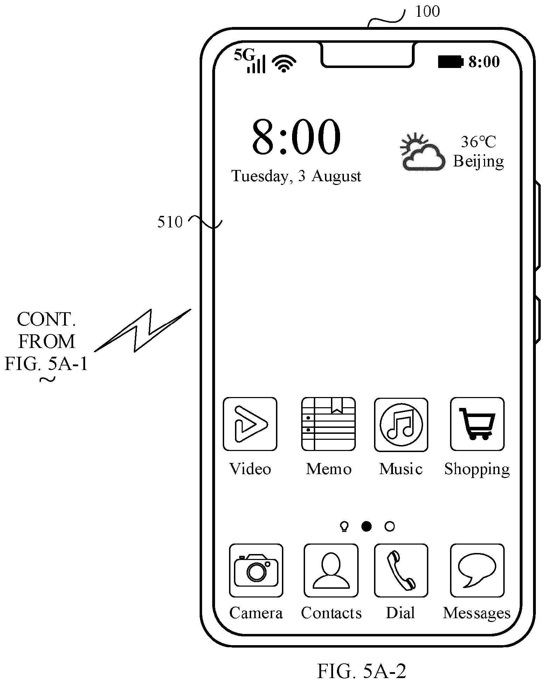

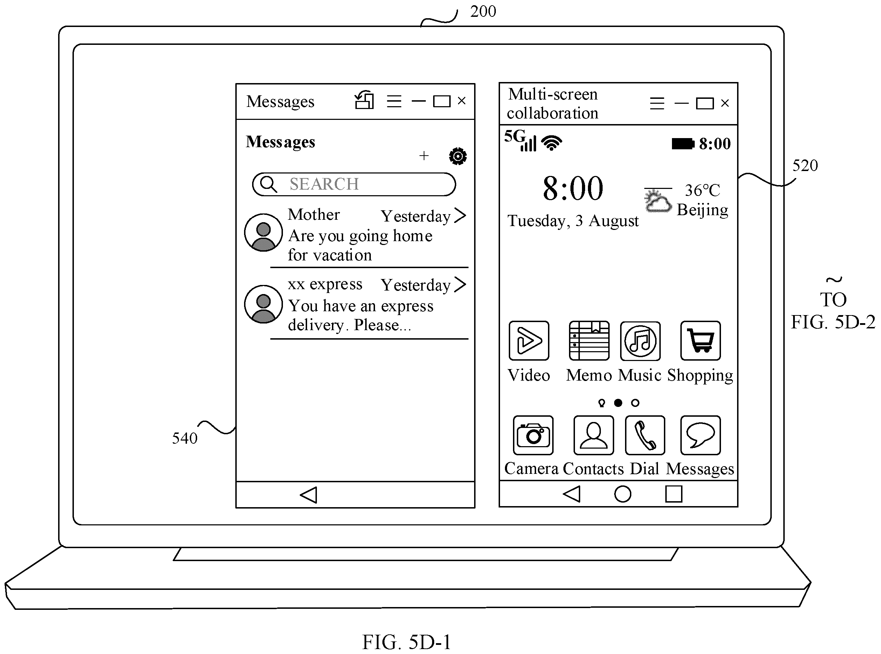

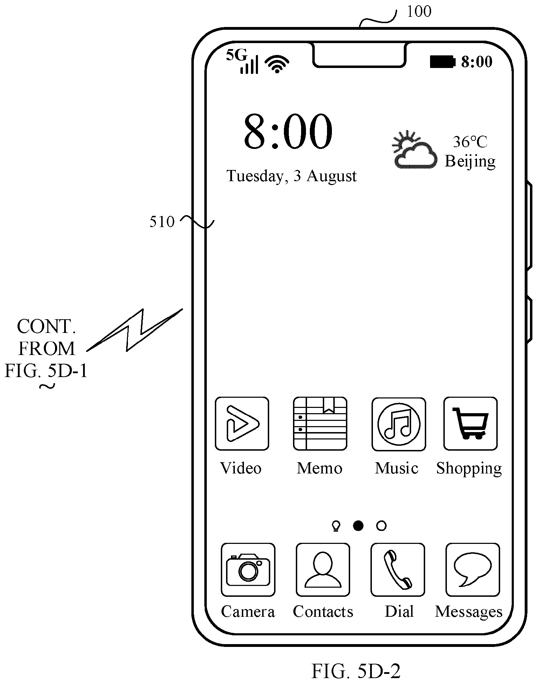

**FIG. 5A-1 to FIG. 5E** **show an example of a multi-screen collaboration scenario** of the **electronic device 100 and the electronic device 200.**

As shown in FIG. 5A-1 and FIG. 5A-2, a communication connection is established between the electronic device 100 and the electronic device 200, and data transmission may be performed, to implement a multi-screen collaboration function. It may be understood that, for an implementation of establishing the communication connection between the electronic device 100 and the electronic device 100, refer to the embodiment in FIG. 1. Details are not described herein again.

The electronic device 100 may display a user interface 510. The user interface 510 may be a home screen of the electronic device 100. The user interface 510 may include a status bar and application icons. The status bar may include a mobile communication signal strength indicator, a Wi-Fi signal strength indicator, a current remaining battery level, time, and the like. The application icons may include a video icon, a memo icon, a music icon, a messages icon, and the like. The application icon may be used to trigger the electronic device 100 to start a corresponding application. In some embodiments, the electronic device 100 may further display a user interface of another application on the user interface 510. The electronic device 200 may display a multi-screen collaboration window 520. The multi-screen collaboration window 520 may be used to display an interface of the electronic device 100.

In some embodiments, content in the multi-screen collaboration window 520 is a mirror image of the electronic device 100. That is, the content displayed in the multi-screen collaboration window 520 may be consistent with content displayed on a screen of the electronic device 100. When the content displayed on the screen of the electronic device 100 changes, the content displayed in the multi-screen collaboration window 520 may change accordingly. The multi-screen collaboration window 520 may also be referred to as a primary window 520.

**The primary window 520 is specifically described herein.**

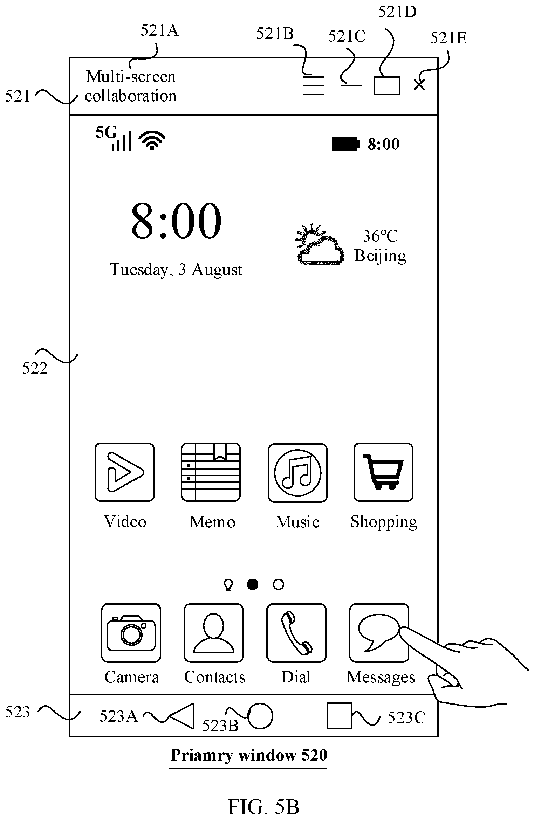

As shown in FIG. 5B, the primary window 520 may include an area 522 used to display an interface of the electronic device 100 and a window control area. The window control area may include a top function area 521 and a bottom area 523. The area 522 used to display the interface of the electronic device 100 may be located between the top function area 521 and the bottom area 523.

The content displayed on the screen of the electronic device 100 may be displayed in the area 522 used to display the interface of the electronic device 100, for example, a home screen. The home screen of the electronic device 100 is not described herein again. It may be understood that the area 522 used to display the interface of the electronic device 100 is an area in which a display corresponding to the primary window 520 is located. A size of the area 522 used to display the interface of the electronic device 100 is a size of the display corresponding to the primary window 520. When a size of the primary window 520 changes, the size of the display corresponding to the primary window 520 also changes. The electronic device 200 may perform an operation like rendering or drawing on the display corresponding to the primary window 520, so that content displayed in the area 522 used to display the interface of the electronic device 100 is consistent with the content displayed on the screen of the electronic device 100.

The electronic device 100 may obtain, in real time, content displayed on the screen, and generate a video stream through encoding. The electronic device 100 may send the video stream to the electronic device 200. In this way, the electronic device 200 may display, in the primary window 520 in a mirror image manner, the content on the screen of the electronic device 100 based on the video stream from the electronic device 100.

In some embodiments, a default size of the primary window 520 may be determined based on a size of the screen of the electronic device 100. The default size of the primary window 520 may be a size determined by the electronic device 200 after multi-screen collaboration. That is, the default size may be a size that is not adjusted by the user. The default size may also be referred to as an initial size. For example, the size of the display corresponding to the primary window 520 may be in a preset proportional relationship with the size of the screen of the electronic device 100. Then, the electronic device 200 may determine sizes of the top function area 521 and the bottom area 523 based on a determined size of the display, to determine the size of the primary window 520. For another example, the size of the primary window 520 may be in a preset proportional relationship with the size of the screen of the electronic device 100. Then, the electronic device 200 respectively determines sizes of different areas in the primary window 520. In this way, a layout of an interface in the area 522 can be the same as a layout of an interface on the screen of the electronic device 100.

The top function area 521 may include a window title 521A, a pin-top control 521B, a minimization control 521C, a maximization control 521D, and a close control 521E.

The window title 521A may indicate content displayed in the primary window 520. For example, the window title 521A may be "Multi-screen collaboration", indicating that the primary window 520 is a multi-screen collaboration window. Specific content of the window title 521A is not limited in embodiments of this application. In some embodiments, when the home screen of the electronic device 100 is displayed in the primary window 520, the window title 521A is "Multi-screen collaboration". When a user interface of an XX application (like a video application, a messages application, or a memo application) in the electronic device 100 is displayed in the primary window 520, the window title 521A may be "XX application".

The pin-top control 521B may be used to display the primary window 520 on the top. That is, regardless of a quantity of windows displayed on the screen of the electronic device 200, the primary window 520 is always displayed at a top layer.

The minimization control 521C may be used to display the primary window 520 in a minimization manner. When the primary window 520 is displayed in a minimization manner, the electronic device 200 may display, on the screen, a control used to identify the primary window 520, so that the user displays the primary window 520 on the screen of the electronic device 200 again.

The maximization control 521D may be used to display the primary window 520 in a maximization manner. Displaying in a maximization manner may mean that the primary window 520 is displayed on the screen of the electronic device 200 in a maximum size. The maximum size of the primary window 520 may adapt to a size of the screen of the electronic device 200. For example, a length-width ratio of the default size of the primary window 520 may be a fixed value, and may be in a preset proportional relationship with a length-width ratio of the screen of the electronic device 100. The primary window 520 is displayed in a maximization size, and a longitudinal height of the primary window 520 may be the same as a longitudinal height of the screen of the electronic device 200. A horizontal width of the primary window 520 may be adapted based on the length-width ratio of the default size of the primary window. In this way, it can be ensured that a ratio relationship between a size of the primary window 520 that is displayed in a maximization manner on the electronic device 200 and the length-width ratio of the screen of the electronic device 100 remains unchanged. When the primary window 520 is displayed in a maximization manner, a layout of an interface in the area 522 may still be the same as a layout of an interface on the screen of the electronic device 100. An implementation method for displaying the primary window 520 in a maximization manner is not limited in embodiments of this application.

The close control 521E may be used to close the primary window 520. Closing the primary window 520 may indicate that multi-screen collaboration between the electronic device 100 and the electronic device 200 ends.

The bottom area 523 may include a return control 523A, a home page control 523B, and a multi-task control 523C. The return control 523A may be used to trigger an interface currently displayed in the area 522 to return to a previous-level interface.

The home page control 523B may be used to trigger display of a home screen of the electronic device 100 in the area 522 (for the home screen, refer to the user interface 510 shown in FIG. 5A-2).

The multi-task control 523C may be used to trigger display of a multi-task switching interface in the area 522.

The controls included in the top function area 521 and the bottom area 523 are merely examples for description in embodiments of this application. It may be understood that, the top function area 521 and the bottom area 523 may further include more or fewer controls used to control the primary window 520. This is not limited in embodiments of this application.

It can be learned from the foregoing embodiment that the content displayed in the area 522 of the primary window 520 is consistent with the content displayed on the screen of the electronic device 100. When the user performs an operation on the electronic device 100, the content displayed on the screen of the electronic device 100 changes, and the content displayed in the area 522 also changes accordingly. That is, the user may perform an operation on the electronic device 100 to control the content displayed in the primary window 520. On the contrary, the user may also perform an operation on the primary window 520, to implement reverse control on the electronic device 100.

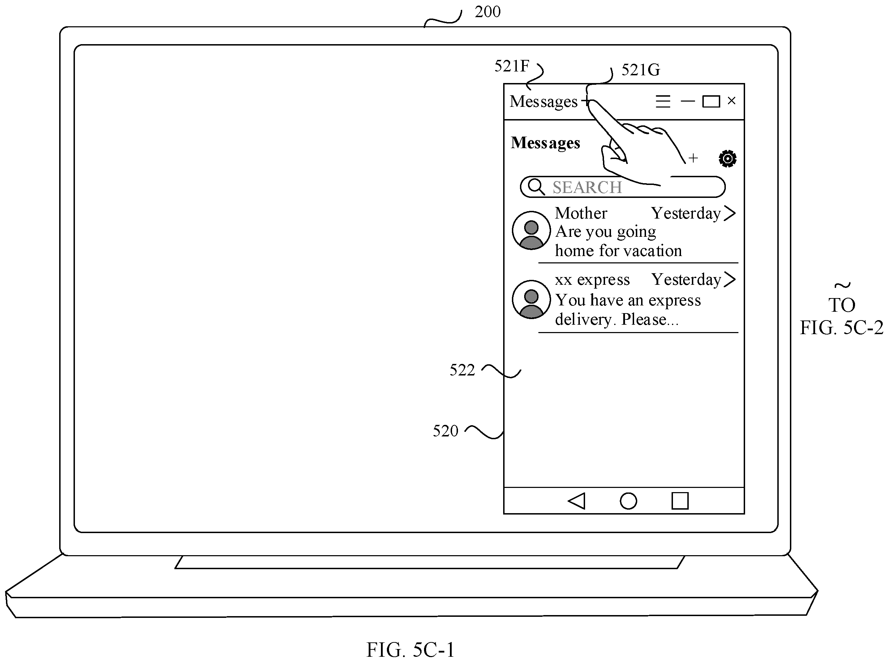

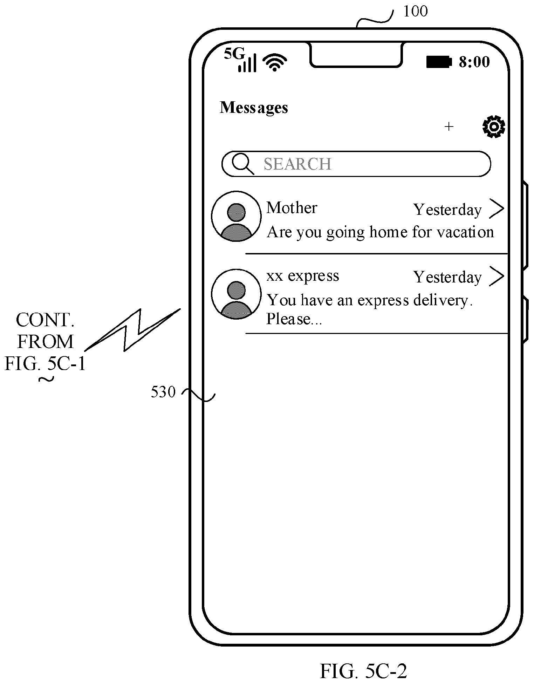

For example, as shown in FIG. 5B, the user taps a messages application icon in the area 522 of the primary window 520. In response to a user operation of tapping the messages application icon, the electronic device 100 may display a user interface 530 shown in FIG. 5C-2. The electronic device 200 may display content shown in FIG. 5C-1 in the primary window 520.

When detecting the user operation of tapping the messages application icon, the electronic device 200 may send an operation instruction (that is, starting a messages application) corresponding to the user operation to the electronic device 100. The electronic device 100 may start the messages application, to display the user interface 530. It can be learned that the user interface 530 may be a main interface of the messages application. The electronic device 100 may encode the main interface of the messages application currently displayed on the screen, to obtain a video stream, and send the video stream to the electronic device 200. The electronic device 200 may display, in the area 522 of the primary window 520, the main interface of the messages application based on the video stream.

In some embodiments, when the primary window 520 displays the user interface (for example, the main interface) of the messages application, the electronic device 200 may replace the window title 521A in the top function area 521 with a window title 521F shown in FIG. 5C-1. The window title 521F may be "Messages", and may indicate that the content displayed in the primary window 520 is the user interface of the messages application. The electronic device 200 may further display a window twin control 521G shown in FIG. 5C-1 in the top function area 521. The window twin control 521G may be used to add a multi-screen collaboration window to the screen of the electronic device 200. The added multi-screen collaboration window may be used to display a user interface of an application currently displayed in the primary window 520.

For example, as shown in FIG. 5C-1, the user taps the window twin control 521G in the top function area 521 of the primary window 520. In response to a user operation of tapping the window twin control 521G, the electronic device 200 may add a multi-screen collaboration window 540 on the screen. That is, the electronic device 100 may simultaneously display the primary window 520 and the multi-screen collaboration window 540.

As shown in FIG. 5D-1 and FIG. 5D-2, a window twining operation is performed on the primary window 520, and the area 522 of the primary window 520 and the electronic device 100 may return to the home screen of the electronic device 100 from the user interface of the messages application shown in FIG. 5C-2. Content displayed in the area 522 (namely, the main interface of the messages application) when the window twin control 521G in the primary window 520 is tapped may be displayed in the multi-screen collaboration window 540.

It can be learned from FIG. 5D-1 and FIG. 5D-2 that the content displayed in the multi-screen collaboration window 540 may be independent of the content displayed on the screen of the electronic device 100. The user may independently perform an operation on the multi-screen collaboration window 540, and use a function provided by the messages application in the electronic device 100, without affecting the content displayed on the screen of the electronic device 100 or in the primary window 520. The multi-screen collaboration window 540 may also be referred to as a sub-window 540.

In other words, in a multi-screen collaboration scenario, a type of the multi-screen collaboration window may include a primary window and a sub-window. The electronic device 200 may display one primary window and one or more sub-windows on the screen. Content displayed in the primary window may be consistent with the content displayed on the screen of the electronic device 100. Content displayed in the sub-window may include a user interface of an application run in a background of the electronic device 100. A sub-window may be used to display a user interface of an application. According to a display method of "one primary window + one or more sub-windows", the user may open a plurality of multi-screen collaboration windows in the electronic device 200, to conveniently operate different applications in the electronic device 100. The user may switch back and forth between user interfaces of different applications. This can improve user experience.

**The sub-window 540 is specifically described herein.**

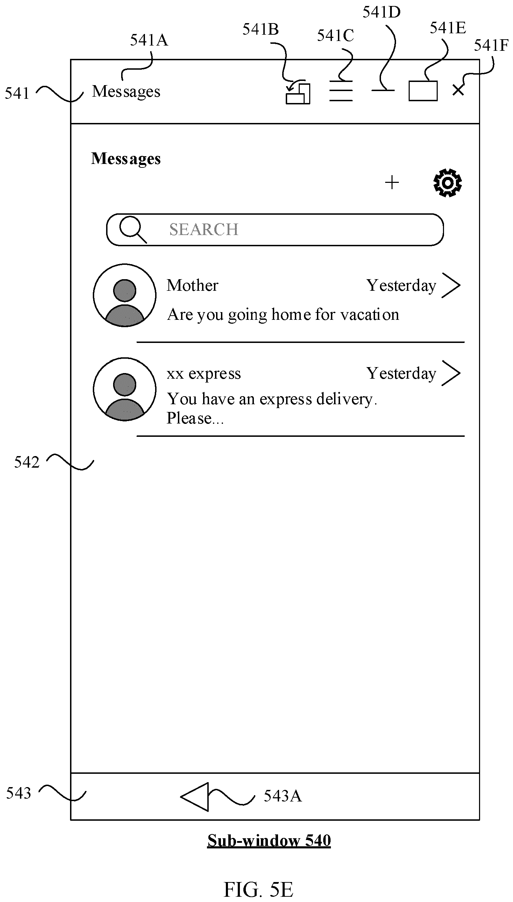

As shown in FIG. 5E, the sub-window 540 may include an area 542 used to display an interface of the electronic device 100 and a window control area. The window control area may include a top function area 541 and a bottom area 543. The area 542 used to display the interface of the electronic device 100 may be located between the top function area 541 and the bottom area 543.

A user interface of an application in the electronic device 100 may be displayed in the area 542 used to display the interface of the electronic device 100. The application may include an application that is run by the electronic device 100 in a background, for example, a messages application shown in FIG. 5E. It may be understood that the area 542 used to display the interface of the electronic device 100 is an area in which a display corresponding to the sub-window 540 is located. The electronic device 100 may encode a user interface of an application run by the electronic device 100, to obtain a video stream, and send the video stream to the electronic device 200. The electronic device 200 may perform, based on the video stream, an operation like rendering or drawing on the display corresponding to the sub-window 540, to display, in the area 542, a user interface of an application corresponding to the video stream.

In some embodiments, a default size of the sub-window 540 may be determined based on a size of the screen of the electronic device 100. Methods for determining a default size of the sub-window 540 and a size of the display corresponding to the sub-window 540 in the default size are not limited in embodiments of this application. For details, refer to the methods for determining the default size of the primary window 520 and the size of the display corresponding to the primary window 520 in the foregoing embodiment.

The top function area 541 may include a window title 541A, a rotation control 541B, a pin-top control 541C, a minimization control 541D, a maximization control 541E, and a close control 541F.

The window title 541A may indicate content displayed in the sub-window 540. For example, the window title 541A may be "Messages", and may indicate that the sub-window 540 is used to display a user interface of the messages application.

The rotation control 541B may be used to rotate the sub-window 540 in a portrait display state to a landscape display state, or rotate the sub-window 540 in a landscape display state to a portrait display state. If an application displayed in the sub-window 540 supports the portrait display state and the landscape display state, the electronic device 200 may display the rotation control 541B in the top function area 541. That the application supports the portrait display state and the landscape display state may indicate that the application has an interface layout in the portrait display state and an interface layout in the landscape display state. The interface layout in the portrait display state and the interface layout in the landscape display state may be designed by a developer of the application.

For the pin-top control 541C, the minimization control 541D, the maximization control 541E, and the close control 541F, respectively refer to the descriptions of the pin-top control 521B, the minimization control 521C, the maximization control 521D, and the close control 521E in the primary window 520 in the foregoing embodiments. Details are not described herein again.

The bottom area 543 may include a return control 543A. The return control 543A may be used to trigger an interface currently displayed in the area 542 to return to a previous-level interface.

The controls included in the top function area 541 and the bottom area 543 are merely examples for description in embodiments of this application. It may be understood that the top function area 541 and the bottom area 543 may further include more or fewer controls used to control the sub-window 540. This is not limited in embodiments of this application.

The user operation of adding the sub-window 540 by using the window twin control 521G is merely an example for description in this embodiment of this application. The user may alternatively add the sub-window by using another user operation.

It should be noted that the user operation in embodiments of this application may be an operation performed by the user by using a peripheral input device of the electronic device 200 like a mouse or a keyboard. For example, the user performs operations such as clicking, double-clicking, and right-clicking by using a mouse. Alternatively, for the electronic device 200 having a touchscreen, the user operation may alternatively be a touch operation, a tap operation, a slide operation, an operation of opening or pinching two fingers on the screen, or the like. A type and a manner of the user operation are not limited in embodiments of this application.

The following describes, based on the multi-screen collaboration scenario shown in FIG. 5A-1 to FIG. 5E, a window size adjustment scenario provided in embodiments of this application.

In some embodiments, a type of the multi-screen collaboration window may include a primary window and a sub-window. An arrangement manner of interface elements in an area that is in the primary window and that is used to display an interface of the electronic device 100 may be the same as an arrangement manner of interface elements on the screen of the electronic device 100. In this way, visual effect close to screen display effect of the electronic device 100 may be presented in the primary window, so that the user controls the electronic device 100 by using the primary window. In this case, the size of the primary window may be a fixed value, and cannot be randomly changed by the user. That the size of the primary window is a fixed value may indicate that both a length and a width of the primary window are fixed values, or a length-width ratio of the primary window is a fixed value. For example, the user may scale the size of the primary window proportionally. When the primary window is scaled proportionally, the length-width ratio of the primary window may remain unchanged. A size of content displayed in the primary window may also be scaled based on a same ratio. In this way, the arrangement manner of interface elements in an area that is in the primary window and that is used to display an interface of the electronic device 100 may remain unchanged, and is still the same as the arrangement manner of interface elements on the screen of the electronic device 100. Content displayed in an area that is in the sub-window and that is used to display the interface of the electronic device 100 may be different from the content displayed on the screen of the electronic device 100. For example, a user interface of an application run in a background of the electronic device 100 may be displayed in the area that is in the sub-window and that is used to display the interface of the electronic device 100. The user may adjust a size of the sub-window, for example, change a length-width ratio of the sub-window, so that the sub-window is displayed on the screen of the electronic device 200 in a desired size. When the size of the sub-window is adjusted, a layout of the content displayed in the sub-window may also be adjusted accordingly, to adapt to the sub-window after the size adjustment.

This application specifically describes how to adjust the size of the sub-window in the multi-screen collaboration window.

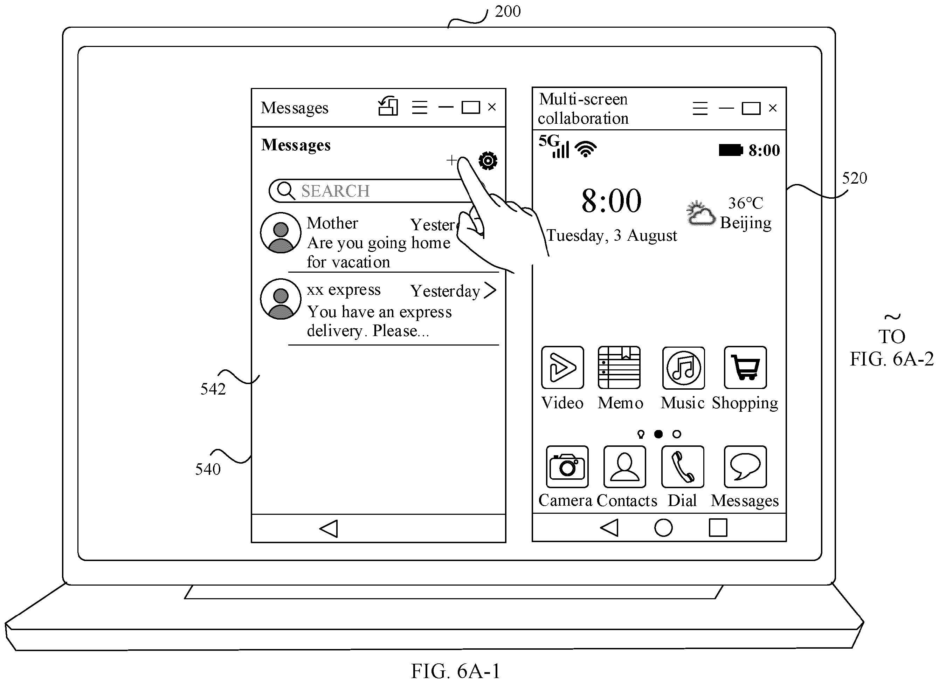

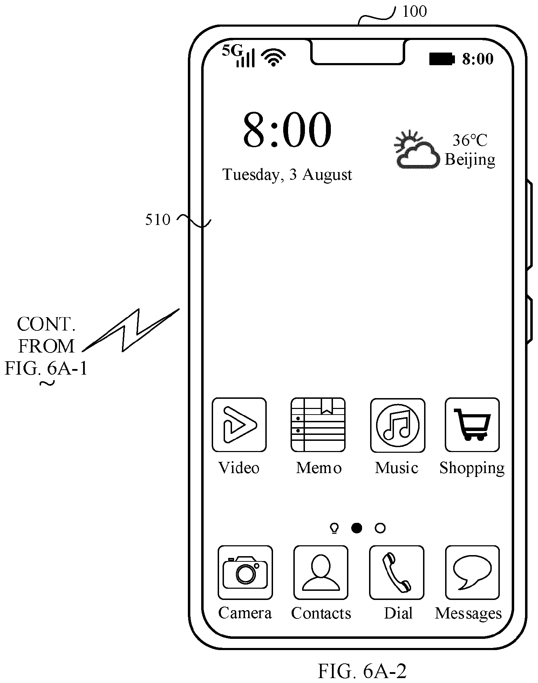

**FIG. 6A-1 to FIG. 6C** **show an example of a window size adjustment scenario according to an embodiment of this application.**

As shown in FIG. 6A-1 and FIG. 6A-2, a communication connection may be established between the electronic device 100 and the electronic device 200, to perform multi-screen collaboration. The electronic device 200 may display the primary window 520 and the sub-window 540. Content displayed on a screen of the electronic device 100 may be displayed in the primary window 520. For example, both the primary window 520 and the screen of the electronic device 100 may display a home screen of the electronic device 100. Content displayed on the primary window 520 and the screen of the electronic device 100 is not limited in embodiments of this application. A user interface of a messages application of the electronic device 100 may be displayed in the sub-window 540. For the sub-window 540, refer to the description of the embodiment shown in FIG. 5E. Details are not described herein again.

The user may tap a newly created control in the area 542 of the sub-window 540, to trigger the messages application to display a new message creation interface. In response to the user operation of tapping the newly created control shown in FIG. 6A-1, the electronic device 200 may display, in the area 542 of the sub-window 540, a new message creation interface shown in FIG. 6B. It may be understood that, content displayed in the area 542 of the sub-window 540 shown in FIG. 6A-1 may be a main interface (or referred to as a level-1 interface of the messages application) of the messages application. Content displayed in the area 542 of the sub-window 540 shown in FIG. 6B is a user interface for new message creation (or referred to as a level-2 interface of the messages application) in the messages application.

In a possible implementation, when detecting the user operation of tapping the newly created control shown in FIG. 6A-1, the electronic device 200 may send an operation instruction (namely, displaying a new message creation interface) corresponding to the user operation to the electronic device 100. The electronic device 100 may render and draw the new message creation interface in a background, and encode the new message creation interface, to obtain a video stream. The electronic device 100 may send the video stream to the electronic device 200. The electronic device 200 may display the new message creation interface in the area 542 of the sub-window 520 based on the video stream. As shown in FIG. 6B, the user may adjust a size of the sub-window 540. For example, the sub-window 540 is a rectangle. The user may touch a left edge of the sub-window 540 and slide leftward or rightward, to change a width of the sub-window 540 without changing a height of the sub-window 540. Alternatively, the user may touch a right edge of the sub-window 540 and slide leftward or rightward, to change a width of the sub-window 540 without changing a height of the sub-window 540. Alternatively, the user may touch an upper edge of the sub-window 540 and slide upward or downward, to change a height of the sub-window 540 without changing a width of the sub-window 540. Alternatively, the user may touch a lower edge of the sub-window 540 and slide upward or downward, to change a height of the sub-window 540 without changing a width of the sub-window 540. Alternatively, the user may touch any one of four vertices of the sub-window 540, and slide in a direction in which a diagonal of the sub-window 540 is located, to change both a height and a width of the sub-window 540. Alternatively, the user may perform a user operation by using two fingers (for example, a thumb and an index finger) acting on a display area of the sub-window 540, and the two fingers are opened in a direction away from each other or pinched in a direction close to each other, in this way, a height and a width of the sub-window 540 are changed at the same time. The user operation of adjusting the size of the sub-window 540 is not limited in this embodiment of this application.

In some embodiments, when detecting a user operation of touching the left edge of the sub-window 540 shown in FIG. 6B, the electronic device 200 may display a size adjustment identifier 611. The size adjustment identifier 611 may indicate that the user may adjust the size of the sub-window 540.

For example, in response to the user operation of touching the left edge of the sub-window 540 and sliding leftward, the electronic device 200 may move the left edge of the sub-window 540 leftward, to increase the width of the sub-window 540. When the user operation of adjusting the size of the sub-window 540 is released (for example, a finger of the user touching the left edge of the sub-window 540 leaves a screen of the electronic device 200), the electronic device 200 may determine an adjusted size of the sub-window 540.

For example, the user adjusts the size of the sub-window 540 based on the sub-window 540 shown in FIG. 6B. In this case, a size of the sub-window 540 shown in FIG. 6B is a size before adjustment. In response to the operation of adjusting the size of the sub-window 540 shown in FIG. 6B, the electronic device 200 moves the left edge of the sub-window 540 leftward as the finger of the user moves. The finger of the user touching the left edge of the sub-window 540 leaves the screen of the electronic device 200 when moving to a position shown in FIG. 6C. When detecting that the user operation is released, the electronic device 200 may stop moving the left edge of the sub-window 540. In this case, a size of the sub-window 540 shown in FIG. 6C is an adjusted size.

As shown in FIG. 6C, after the size adjustment, a layout of an application interface in the area 542 of the sub-window 540 may be adjusted to adapt to the sub-window 540 obtained after the size adjustment. It can be learned that a layout of a messages application interface in the area 542 of the sub-window 540 may be different before and after the size adjustment. Before the size adjustment, the messages application interface in the area 542 of the sub-window 540 is a new message creation interface (refer to the area 542 shown in FIG. 6B). After the size adjustment, a left side of the messages application interface in the area 542 of the sub-window 540 is an area including an interface element on the main interface of the messages application, and a right side is an area including an interface element on the new message creation interface of the messages application. In this way, after adjusting the size of the sub-window 540, the user may view, in an area on a left side of the sub-window 540 shown in FIG. 6C, a message list of received and sent messages in the messages application, and tap an identifier of a message to view specific content of the message. The user may create a new message (for example, enter a recipient of the message or enter content of the newly created message) in an area on a right side of the sub-window 540 shown in FIG. 6C. A layout of the messages application interface in the sub-window 540 shown in FIG. 6C may be referred to as a layout of a columnar display style (namely, a columnar layout). The columnar layout of the messages application interface is not specifically limited in embodiments of this application.

**The following describes an implementation method for adjusting a layout of an application interface in a multi-screen collaboration window when a size of the multi-screen collaboration window changes according to an embodiment of this application.**

In some embodiments, an interface element of an application may have an arrangement manner that adapts to screens of different sizes. As there are more types of electronic devices, sizes of different types of electronic devices may be different. For example, a size of a screen of a mobile phone, a size of a screen of a tablet computer, and a size of a screen of a PC are different. A same application may be run on different types of electronic devices. A developer of the application may develop an interface element arrangement manner that adapts to screens of different sizes, so that the application can display interface elements in an application interface on the screens of different sizes in an appropriate arrangement manner with reference to screen features of different types of electronic devices. This improves user experience of using an application on different types of electronic devices. In this case, the interface element arrangement manner that adapts to screens of different sizes may also adapt to multi-screen collaboration windows of different sizes.

Herein, a user interface of a messages application (namely, a messages application interface) is used as an example for description.

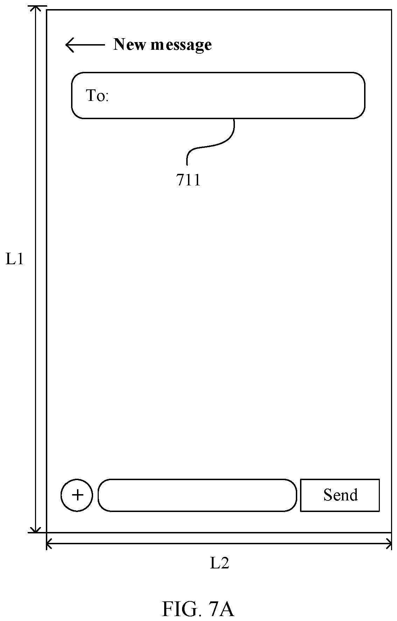

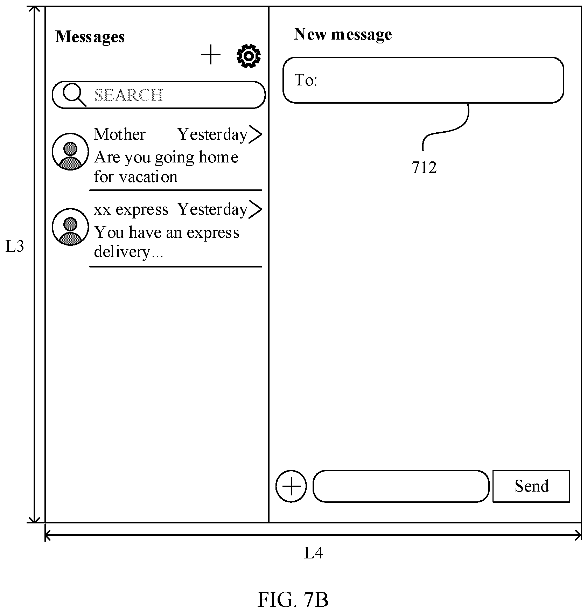

FIG. 7A and FIG. 7B show examples of two arrangement manners of interface elements in a messages application interface.

The interface element arrangement manner shown in FIG. 7A may adapt to a screen whose length-width ratio is L1:L2, where x1≤(L1:L2)≤x2. Herein, x1 is a positive number. That is, when an electronic device whose screen length-width ratio is within a range of [x1, x2] runs a messages application, a messages application interface may be displayed in the interface element arrangement manner shown in FIG. 7A. When a plurality of electronic devices with different length-width ratios display the messages application interface based on the layout shown in FIG. 7A, and the length-width ratios of screens are within the range of [x1, x2], display styles (such as sizes) of interface elements in the messages application interface may be slightly different on the screens of the plurality of electronic devices. For example, a larger screen with a length-width ratio of L1:L2 may indicate a shorter length of a recipient input control 711 shown in FIG. 7A.

It can be learned from the foregoing embodiment that, in a multi-screen collaboration scenario, the electronic device 200 may render and draw an application interface of the electronic device 100 on a display (namely, an area used to display an interface of the electronic device 100) corresponding to a multi-screen collaboration window. In this case, when a length-width ratio of the display is within the range of [x1, x2], the display may present the interface element arrangement manner shown in FIG. 7A. That is, when a size of the multi-screen collaboration window is adjusted, and a length-width ratio of the display corresponding to the multi-screen collaboration window obtained after the adjustment falls within the range of [x1, x2], the electronic device 100 may generate a messages application interface in the interface element arrangement manner shown in FIG. 7A, and encode the messages application interface to obtain a video stream. The electronic device 100 may send the video stream to the electronic device 200. Then, the electronic device 200 may display, in the multi-screen collaboration window whose size is adjusted, the messages application interface of the interface layout shown in FIG. 7A.

The interface element arrangement manner shown in FIG. 7B may adapt to a screen whose length-width ratio is L3:L4, where x3≤(L3:L4)≤x4. Herein, x3 is a positive number. That is, when an electronic device whose screen length-width ratio is within a range of [x3, x4] runs a messages application, a messages application interface may be displayed in the interface element arrangement manner shown in FIG. 7B. When a plurality of electronic devices with different length-width ratios display the messages application interface based on the interface element arrangement manner shown in FIG. 7B, and the length-width ratios of screens are within the range of [x3, x4], sizes of interface elements in the messages application interface may be slightly different on the screens of the plurality of electronic devices. For example, a larger screen with a length-width ratio of L3:L4 may indicate a shorter length of a recipient input control 712 shown in FIG. 7B. For an interface layout shown in FIG. 7B, refer to the descriptions of the embodiment shown in FIG. 6C. Details are not described herein again.

It can be learned from the foregoing embodiment that, when a length-width ratio of a display corresponding to a multi-screen collaboration window is within the range of [x3, x4], the display may present the interface element arrangement manner shown in FIG. 7B. That is, when a size of the multi-screen collaboration window is adjusted, and a length-width ratio of the display corresponding to the multi-screen collaboration window obtained after the adjustment falls within the range of [x3, x4], the electronic device 100 may generate a messages application interface in the interface element arrangement manner shown in FIG. 7B, and encode the messages application interface to obtain a video stream. The electronic device 100 may send the video stream to the electronic device 200. Then, the electronic device 200 may display, in the multi-screen collaboration window whose size is adjusted, the messages application interface of the interface layout shown in FIG. 7B.

In addition to the two interface element arrangement manners shown in FIG. 7A and FIG. 7B, the messages application may further include more interface element arrangement manners that adapt to screens of other sizes. An interface element arrangement manner of the application that adapts to screens of different sizes is not limited in embodiments of this application. The electronic device 100 may determine a specific size range to which the length-width ratio of the display obtained after the size adjustment belongs. Then, the electronic device 100 may determine a layout of an application interface on the display based on the size range to which the length-width ratio of the display belongs. For example, the messages application may further have an interface element arrangement manner that adapts to a landscape state of the electronic device 100. In the messages application, interface elements on a same interface are arranged in different manners when the electronic device 100 is in a landscape state and in a portrait state. When the length-width ratio of the display obtained after the size adjustment belongs to a landscape size range, the electronic device 100 may determine display data of the messages application interface based on the interface element arrangement manner in the landscape state. Therefore, the messages application interface is presented, in the interface element arrangement manner in the landscape state, on the display obtained after the size adjustment.

A plurality of displays whose length-width ratios belong to the landscape size range but whose sizes are different may have a same interface element arrangement manner, and may have different interface element display styles.

It may be understood that the size of the multi-screen collaboration window is adjusted (for example, a height and a width of the multi-screen collaboration window are separately adjusted), so that the length-width ratio of the display corresponding to the multi-screen collaboration window is included in the landscape size range; and the interface elements displayed in the multi-screen collaboration window are arranged in the interface element arrangement manner in the landscape state. This may be equivalent to a rotation operation performed on the multi-screen collaboration window. In other words, the multi-screen collaboration window is rotated from a portrait state to a landscape state.

In some embodiments, the foregoing interface element arrangement manners that adapt to screens of different sizes may be stored in an installation package of an application, or stored in a cloud server. This is not limited in embodiments of this application. In a process of running an application, the electronic device 100 may obtain a corresponding interface element arrangement manner based on a size of a screen, to generate an application interface having the interface element arrangement manner.

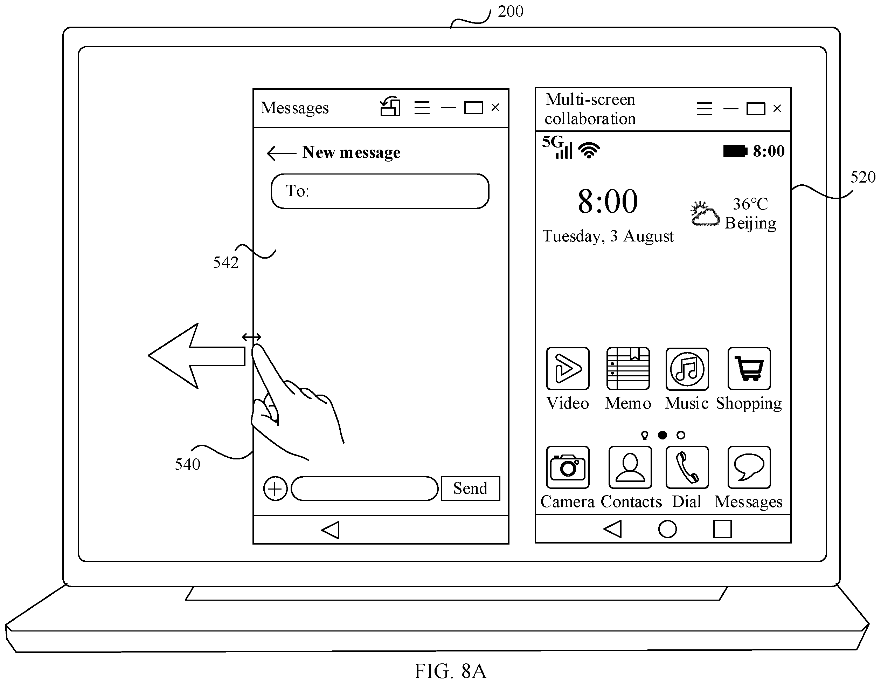

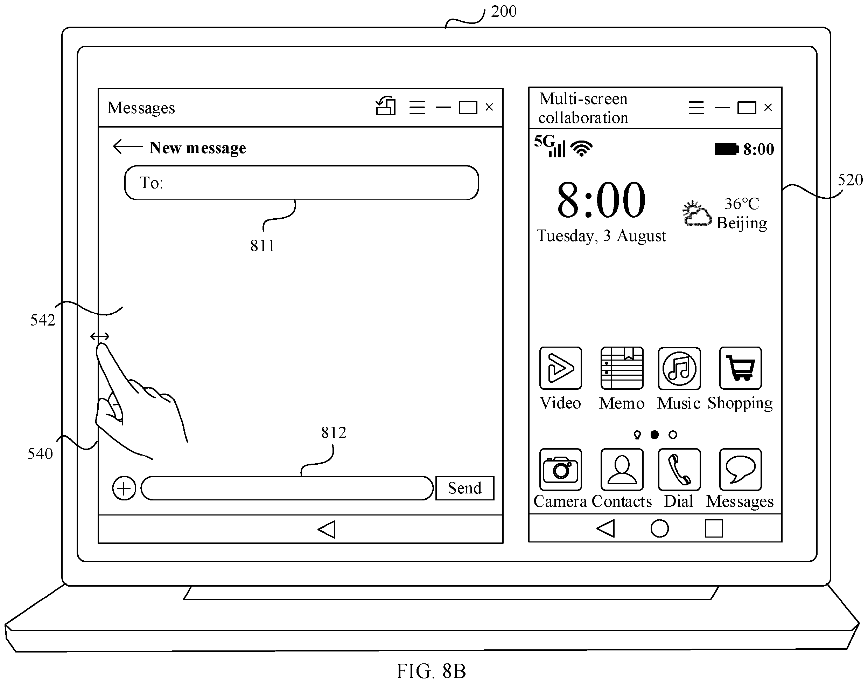

**FIG. 8A** **and** **FIG. 8B** **show an example of another window size adjustment scenario according to an embodiment of this application.**

As shown in FIG. 8A, a communication connection may be established between the electronic device 100 and the electronic device 200, to perform multi-screen collaboration. The electronic device 200 may display the primary window 520 and the sub-window 540. For content displayed in the primary window 520 and the sub-window 540, refer to the description of the foregoing embodiment. Details are not described herein again.

The user may adjust a size of the sub-window 540. For a user operation of adjusting the size of the sub-window 540, refer to the description of the embodiment shown in FIG. 6B.

In some embodiments, in response to a user operation of touching a left edge of the sub-window 540 and sliding leftward, the electronic device 200 may move the left edge of the sub-window 540 leftward, to increase a width of the sub-window 540. When the user operation of adjusting the size of the sub-window 540 is released (for example, a finger of the user touching the left edge of the sub-window 540 leaves a screen of the electronic device 200), the electronic device 200 may determine an adjusted size of the sub-window 540. For example, when the user releases, at a position shown in FIG. 8B, the user operation of adjusting the size of the sub-window 540, the electronic device 200 may determine that a size of the sub-window 540 shown in FIG. 8B is the adjusted size.

As shown in FIG. 8B, after the foregoing size adjustment, an interface element display style in the area 542 of the sub-window 540 may be adjusted to adapt to the sub-window 540 obtained after the size adjustment. It can be learned that a layout of a messages application interface in the area 542 of the sub-window 540 may be different before and after the size adjustment. That a layout of a messages application interface is different may be specifically represented as that an interface element display style of the messages application interface is different. Interface element arrangement manners of the messages application interface may be the same before and after the size adjustment.

It can be learned by comparing the sub-windows 540 in FIG. 8A and FIG. 8B that, after size adjustment, the width of the sub-window 540 increases. In the sub-window 540 obtained after the size adjustment shown in FIG. 8B, horizontal lengths of a recipient input control 811 and an information content input control 812 may be increased, to adapt to the sub-window 540 whose width is increased. A display style of another interface element on the messages application interface in the area 542 of the sub-window 540 may also be changed, to adapt to the sub-window 540 whose width is increased. This is not limited in this embodiment of this application.

**The following describes another implementation method for adjusting a layout of an application interface in a multi-screen collaboration window when a size of the multi-screen collaboration window changes according to an embodiment of this application.**

In some embodiments, there may be only one interface element arrangement manner of an application. That is, a developer of an application may not develop an interface element arrangement manner that adapts to screens of different sizes. In this case, when the size of the multi-screen collaboration window changes, the electronic device 100 may adjust an interface element display style (for example, a size) while keeping an interface element arrangement manner unchanged, so that a layout of the application interface adapts to the multi-screen collaboration window obtained after the size adjustment.

The messages application interface is still used as an example for description herein.

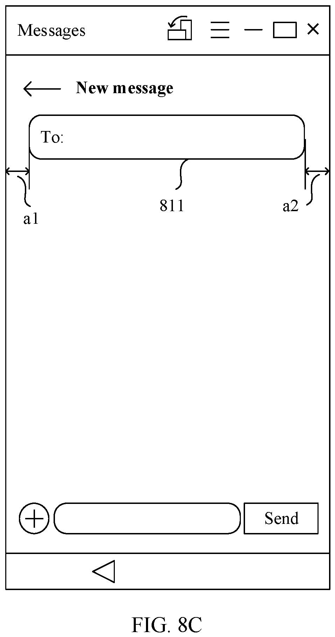

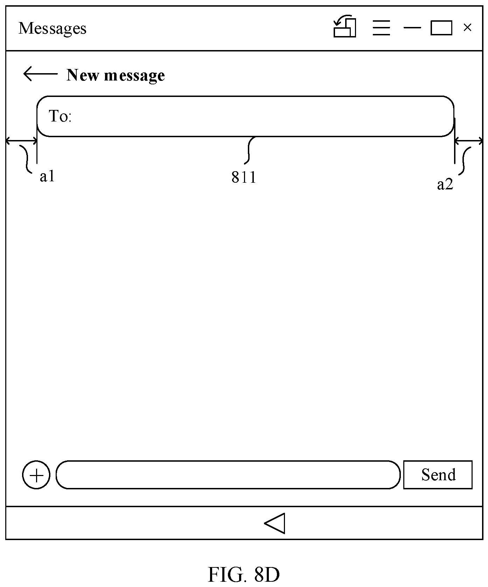

FIG. 8C and FIG. 8D show examples of two interface layouts of the messages application interface when interface elements are arranged in a same manner.

In some embodiments, an interface element arrangement manner of an application may include but is not limited to a margin (for example, an outer margin or an inner margin), a spacing between interface elements, and an alignment manner. In a process of generating an application interface, based on a size of a display, the electronic device 100 may adjust an interface element display style (for example, a size) in an interface element arrangement manner, so that the interface element display style adapts to the display. In this way, an application interface with only one interface element arrangement manner may also adapt to displays of different sizes (that is, adapt to multi-screen collaboration windows of different sizes) based on different interface layouts.

As shown in FIG. 8C, an interface element arrangement manner of the messages application interface may include margin information of the recipient input control 811. For example, a left margin of the recipient input control 811 is a1, and a right margin is a2. Both a1 and a2 are positive numbers. The left margin of the recipient input control 811 may indicate a distance between a left edge of the recipient input control 811 and a left edge of a display area (for example, an area in which a display is located). The left margin of the recipient input control 811 may indicate a distance between a right edge of the recipient input control 811 and a right edge of the display area (for example, the area in which the display is located).

When the size of the sub-window 540 is adjusted as shown in FIG. 8A and FIG. 8B, the electronic device 100 may adjust the interface element display style based on the interface element arrangement manner of the messages application interface, so that interface elements meet a display condition of the interface element arrangement manner. For example, when the width of the sub-window 540 increases (that is, a width of a display corresponding to the sub-window 540 increases), the electronic device 100 may generate a messages application interface shown in FIG. 8D. In FIG. 8D, a left margin of the recipient input control 811 is a1, and a right margin is a2. It can be learned by comparing the recipient input controls 811 shown in FIG. 8C and FIG. 8D that, when a size of the display changes (for example, a width increases), the left margin and the right margin of the recipient input control 811 may remain unchanged, and a display style of the recipient input control 811 may change (for example, a horizontal length increases). It may be understood that, in a process of changing the size of the display, a display style of another interface element other than the recipient input control 811 in the messages application interface shown in FIG. 8C may be changed, but an interface element arrangement manner may remain unchanged. In this way, an interface layout of the messages application interface can adapt to the display obtained after the size adjustment.

It can be learned from the foregoing embodiment that, in a process of multi-screen collaboration between the electronic device 100 and the electronic device 200, the user may adjust a size of the multi-screen collaboration window displayed on the electronic device 200. The user may adjust the size of the multi-screen collaboration window to a plurality of different sizes. A length-width ratio of the multi-screen collaboration window can be changed. After the size of the multi-screen collaboration window changes, a layout of an application interface displayed in the multi-screen collaboration window may also be adaptively adjusted to adapt to the multi-screen collaboration window whose size changes. In this way, the user may better allocate, by adjusting the size of the multi-screen collaboration window, appropriate display areas to one or more multi-screen collaboration windows and one or more windows displayed when the electronic device 200 runs another application, to improve screen space utilization of the electronic device 200. The user may adjust the size of the multi-screen collaboration window to a desired size. This can improve user experience of performing multi-screen collaboration by using the device.

**The following describes a window size adjustment method provided in an embodiment of this application.**

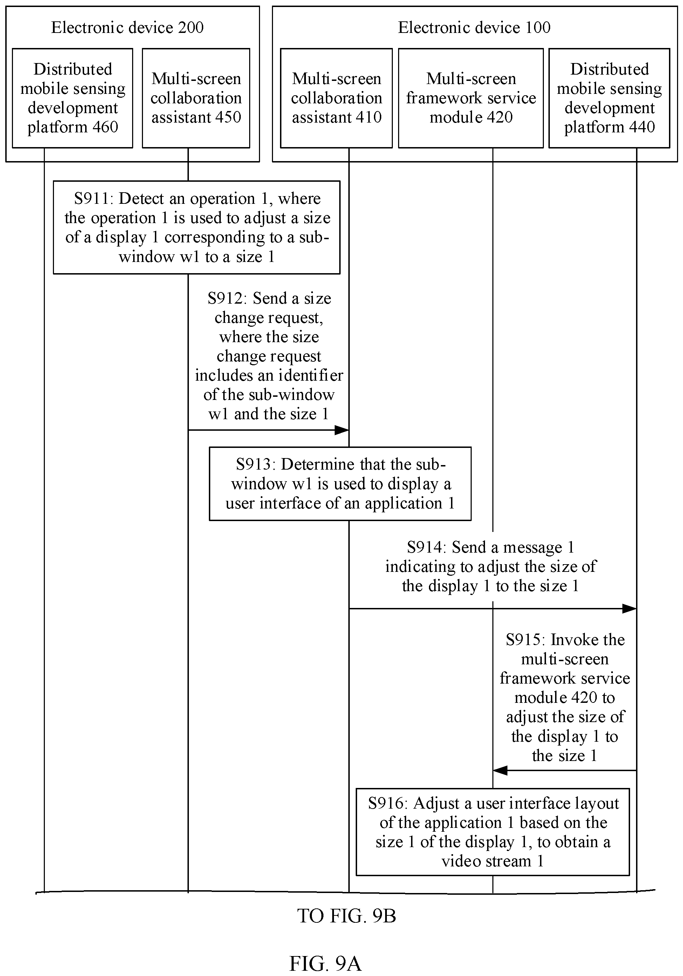

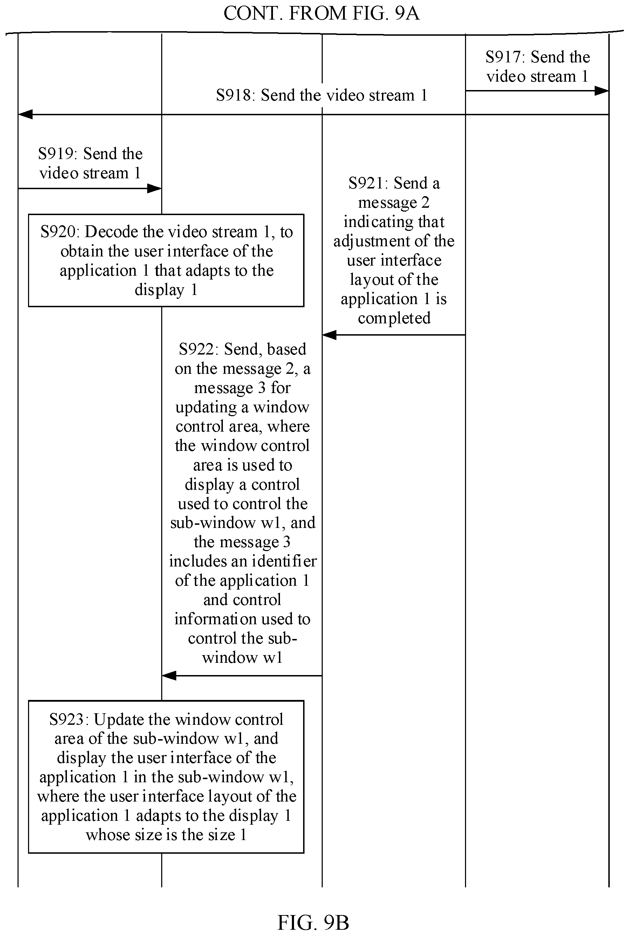

FIG. 9A and FIG. 9B are an example of a flowchart of a window size adjustment method. The method may include step S911 to step S923.

S911: A multi-screen collaboration assistant 450 in the electronic device 200 detects an operation 1, where the operation 1 is used to adjust a size of a display 1 corresponding to a sub-window w1 to a size 1.

The operation 1 may be a user operation performed on the sub-window w1 to adjust a size of the sub-window w1. For the operation 1, refer to the user operations shown in FIG. 6B and FIG. 6C. It can be learned from the foregoing embodiment that the sub-window w1 may include an area used to display an interface of the electronic device 100 and a window control area. The area used to display the interface of the electronic device 100 is an area in which the display 1 corresponding to the sub-window w1 is located. When the size of the sub-window w1 is adjusted, the size of the display 1 corresponding to the sub-window w1 also changes accordingly. Herein, an example in which the size of the display 1 corresponding to the sub-window w1 changes to the size 1 as the size of the sub-window w1 changes is specifically used for description.

A length-width ratio of the display 1 whose size is the size 1 may be different from a length-width ratio of the display 1 obtained before the size adjustment. In other words, in the window size adjustment method in this application, the user may scale the size of the sub-window w1 proportionally, and may scale a length-width ratio of the sub-window w1 to a plurality of different length-width ratios without being limited by a default size of the sub-window (that is, without being limited by a screen size of the electronic device 100)

S912: The multi-screen collaboration assistant 450 may send a size change request to a multi-screen collaboration assistant 410 in the electronic device 100, where the size change request includes an identifier of the sub-window w1 and the size 1.

In some embodiments, a plurality of multi-screen collaboration windows may be opened in the electronic device 200. When the size of the sub-window w1 changes, the electronic device 200 may send the identifier of the sub-window w1 to the electronic device 100, so that the electronic device 100 determines a specific sub-window whose size changes, and adjusts an application interface layout displayed in the sub-window whose size changes.

It may be understood that information exchange between the multi-screen collaboration assistant 450 and the multi-screen collaboration assistant 410 may be specifically implemented by using communication apparatuses of the electronic device 200 and the electronic device 100. A method for exchanging information between an application in the electronic device 100 and an application in the electronic device 200 is not limited in this embodiment of this application.

S913: The multi-screen collaboration assistant 410 may determine that the sub-window w1 is used to display a user interface of an application 1.

In some embodiments, the multi-screen collaboration assistant 450 may determine a size of the sub-window w1 obtained after adjustment. The multi-screen collaboration assistant 450 may encapsulate, into the size change request, the identifier of the sub-window w1 and the size of the sub-window w1 obtained after adjustment, and send the size change request to the multi-screen collaboration assistant 410. The multi-screen collaboration assistant 410 may determine, based on the identifier of the sub-window w1, that the sub-window w1 corresponds to the display 1, and determine, based on the size of the sub-window w1 obtained after adjustment, that the size of the display 1 is adjusted by the user to the size 1. In other words, the size 1 of the display 1 may be sent by the multi-screen collaboration assistant 450, or may be calculated by the multi-screen collaboration assistant 410. This is not limited in this embodiment of this application.

In addition, the multi-screen collaboration assistant 410 may further determine, based on the identifier of the sub-window w1, that the sub-window w1 is used to display the user interface of the application 1. The user interface of the application 1 displayed in the sub-window w1 may be obtained after the electronic device 100 runs the application 1 in a background and sent by the electronic device 100 to the electronic device 200.

S914: The multi-screen collaboration assistant 410 sends, to a DMSDP 440 in the electronic device 100, a message 1 indicating to adjust the size of the display 1 to the size 1.

S915: The DMSDP 440 invokes a multi-screen framework service module 420 to adjust the size of the display 1 to the size 1.

S916: The multi-screen framework service module 420 adjusts a user interface layout of the application 1 based on the size 1 of the display 1, to obtain a video stream 1.

In some embodiments, when receiving an invocation request of the DMSDP 440, the multi-screen framework service module 420 may adjust the size of the display 1 to the size 1. The multi-screen framework service module 420 may adjust the user interface layout of the application 1 based on the size 1, so that the user interface layout of the application 1 adapts to the display 1 whose size is the size 1. For a method for adjusting the user interface layout of the application 1 by the multi-screen framework service module 420, refer to the embodiments shown in FIG. 7A,

FIG. 7B, FIG. 8C, and FIG. 8D. Details are not described herein again.

The multi-screen framework service module 420 may encode the user interface of the application 1 that adapts to the display 1 whose size is 1, to obtain the video stream 1.

It may be understood that the multi-screen collaboration assistant 410 notifies the DMSDP 440 that the size of the display 1 needs to be adjusted to the size 1. The DMSDP 440 invokes the multi-screen framework service module 420 to adjust the size of the display 1. The DMSDP 440 may sense the size of the display 1 in real time, to implement transmission of the video stream 1 between the electronic device 100 and the electronic device 200 by using the DMSDP 440 and a DMSDP 460, and perform reverse control on the electronic device 100 in the multi-screen collaboration window of the electronic device 200.

S917: The multi-screen framework service module 420 sends the video stream 1 to the DMSDP 440.

S918: The DMSDP 440 sends the video stream 1 to the DMSDP 460 in the electronic device 200.

S919: The DMSDP 460 sends the video stream 1 to the multi-screen collaboration assistant 450.

S920: The multi-screen collaboration assistant 450 decodes the video stream 1, to obtain the user interface of the application that adapts to the display 1.

S921: The multi-screen framework service module 420 may send, to the multi-screen collaboration assistant 410, a message 2 indicating that adjustment of the user interface layout of the application 1 is completed.

S922: The multi-screen collaboration assistant 410 sends, to the multi-screen collaboration assistant 450 based on the message 2, a message 3 for updating the window control area, where the window control area is used to display a control used to control the sub-window w1, and the message 3 includes an identifier of the application 1 and control information used to control the sub-window w1.

In some embodiments, the sub-window w1 may include the window control area. The window control area may be used to display a control used to control the sub-window w1, for example, a rotation control, a minimization control, a maximization control, or a close control. The control used to control the sub-window w1 may include a control directly determined by the electronic device 200 and a control determined by the electronic device 100 based on an application displayed in the sub-window w1. For example, the user may tap the close control to close the sub-window w1. The close control may be a control directly determined by the electronic device 200. For another example, the user may tap the rotation control, so that the sub-window w1 changes from a current portrait display state to a landscape display state. The rotation control may be a control determined by the electronic device 100 based on an application displayed in the sub-window w1. The electronic device 100 may determine whether the application displayed in the sub-window w1 supports the portrait display state and the landscape display state. If the application displayed in the sub-window w1 supports the portrait display state and the landscape display state, the electronic device 100 may send information about the rotation control to the electronic device 200. In this way, the electronic device 200 may display the rotation control in the window control area. If the application displayed in the sub-window w1 does not support the landscape display state, the application displayed in the sub-window w1 can be displayed only in the portrait display state. The window control area of the sub-window w1 does not include the rotation control. The window control area may be further used to display a window title. The window title may be determined based on content displayed in the sub-window w1. For example, the window title may be a name of the application displayed in the sub-window w1. The electronic device 100 may send, to the electronic device 200, an identifier of the application displayed in the sub-window w1. The electronic device 200 may determine a window title of the sub-window w1 based on the identifier of the application.

The message 3 may include the identifier of the application 1 and the control information used to control the sub-window w1. The multi-screen collaboration assistant 450 may determine the window title of the sub-window w1 based on the identifier of the application 1, and determine, based on the control information used to control the sub-window w1, a control (for example, a rotation control) presented in the window control area. Content included in the message 3 is not limited in this embodiment of this application. In addition to the identifier of the application 1 and the control information used to control the sub-window w1, the message 3 may further include other content, for example, an application icon of the application 1.

It may be understood that content displayed in the window control area of the sub-window w1 is related to an application displayed in the sub-window w1. For example, if applications displayed in the sub-window w1 are different, window titles of the sub-window w1 may be different. For another example, if applications displayed in the sub-window w1 are different, controls that are displayed in the sub-window w1 and that are used to control the sub-window w1 may be different. When the multi-screen framework service module 420 obtains the video stream 1, the multi-screen framework service module 420 may further notify the multi-screen collaboration assistant 410 that adjustment of the user interface layout of the application 1 is completed and the layout can adapt to the display 1 obtained after the size adjustment (that is, send the message 2). Then, the multi-screen collaboration assistant 410 may determine, based on the application displayed in the sub-window w1, a control that can be displayed in the window control area, and send the message 3 to the multi-screen collaboration assistant 450, so that the multi-screen collaboration assistant 450 updates, after the size of the sub-window w1 is adjusted, the content displayed in the window control area.

S923: The multi-screen collaboration assistant 450 updates the window control area of the sub-window w1, and displays the user interface of the application 1 in the sub-window w1, where the user interface layout of the application 1 adapts to the display 1 whose size is the size 1.

The multi-screen collaboration assistant 450 may update the window control area of the sub-window w1 based on the message 3, and display, based on the video stream 1, the user interface of the application 1 in the area that is in the sub-window w1 and that is used to display the interface of the electronic device 100. For details, refer to the scenarios shown in FIG. 6B and FIG. 6C.

It can be learned from the method shown in FIG. 9A and FIG. 9B that, in a process of multi-screen collaboration between the electronic device 100 and the electronic device 200, the user may adjust the size of the multi-screen collaboration window displayed on the electronic device 200. The user may adjust the size of the multi-screen collaboration window to a plurality of different sizes. A length-width ratio of the multi-screen collaboration window can be changed. After the size of the multi-screen collaboration window changes, a layout of an application interface displayed in the multi-screen collaboration window may also be adaptively adjusted to adapt to the multi-screen collaboration window whose size changes. In this way, the user may better allocate, by adjusting the size of the multi-screen collaboration window, appropriate display areas to one or more multi-screen collaboration windows and one or more windows displayed when the electronic device 200 runs another application, to improve screen space utilization of the electronic device 200. The user may adjust the size of the multi-screen collaboration window to a desired size. This can improve user experience of performing multi-screen collaboration by using the device.

In some embodiments, an application displayed in the multi-screen collaboration window supports a parallel view function. If the size of the multi-screen collaboration window is adjusted to a size that can enable the application to be displayed in a parallel view style, the electronic device 200 may display, in the multi-screen collaboration window, a user interface in the parallel view style.

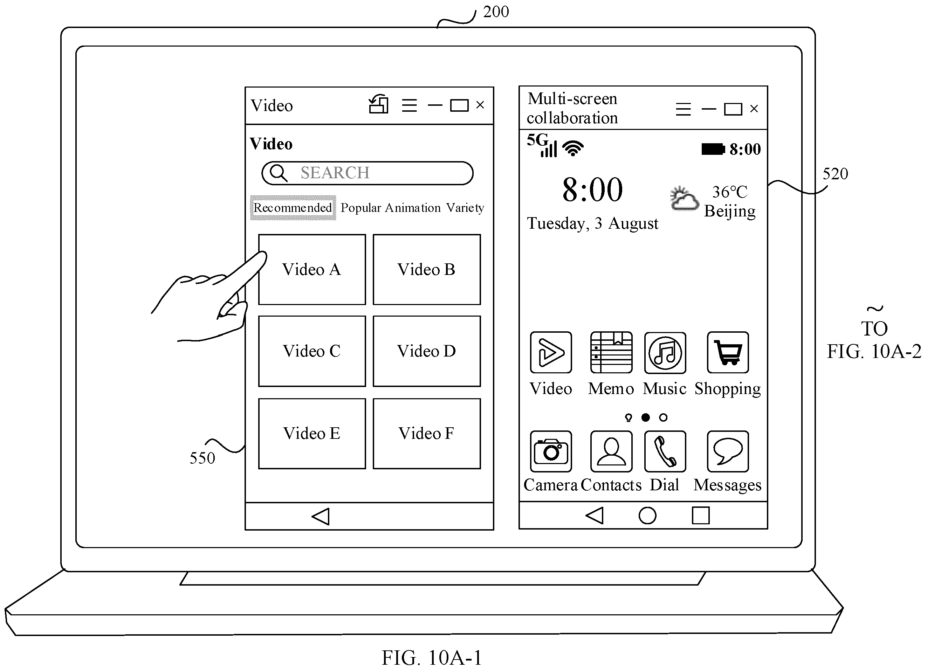

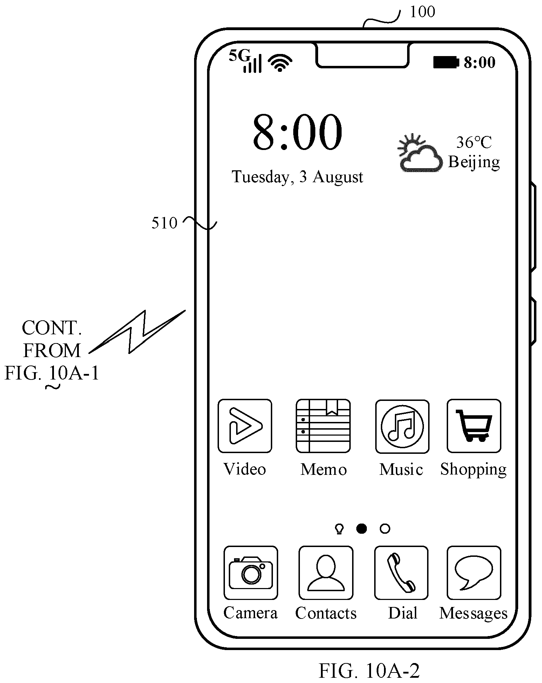

**FIG. 10A-1 to FIG. 10C** **show an example of another window size adjustment scenario according to an embodiment of this application.**

As shown in FIG. 10A-1 and FIG. 10A-2, a communication connection may be established between the electronic device 100 and the electronic device 200, to perform multi-screen collaboration. The electronic device 200 may display the primary window 520 and a sub-window 550. For the primary window 520, refer to the description of the embodiment shown in FIG. 5B. The sub-window 550 may be used to display a user interface of a video application (namely, a video application interface).

For example, the sub-window 550 may include a window control area and an area used to display an interface of the electronic device 100. For the window control area of the sub-window 550, refer to the description of the control area of the sub-window 540 shown in FIG. 5E. Details are not described herein again. The area that is in the sub-window 550 and that is used to display the interface of the electronic device 100 is a display area corresponding to the sub-window 550. The video application interface, for example, a main interface of the video application shown in FIG. 10A-1, may be displayed in the area that is in the sub-window 550 and that is used to display the interface of the electronic device 100.

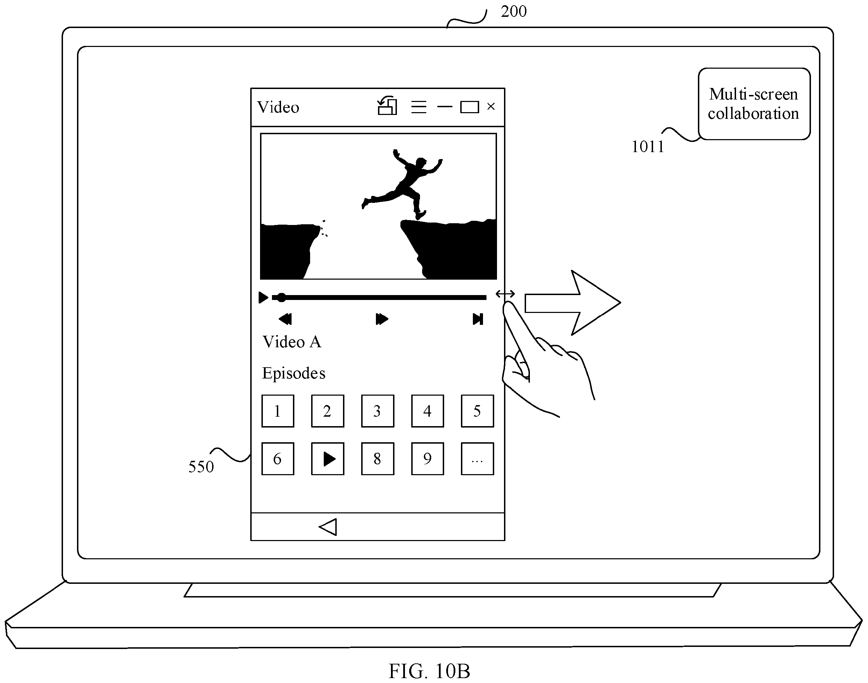

As shown in FIG. 10A-1, the user may tap a video A option on the main interface of the video application in the sub-window 550, to watch a video A. In response to a user operation of tapping the video A option shown in FIG. 10A-1, the electronic device 200 may display, in the sub-window 550, a video A playing interface shown in FIG. 10B.

In some embodiments, in response to a user operation of minimizing the primary window 520 (for example, a user operation of tapping a minimization control in the window control area of the primary window 520), the electronic device 200 may display the primary window 520 in a minimization manner. When the primary window 520 is displayed in a minimization manner, the electronic device 200 may display, on a screen, a primary window identifier 1011 shown in FIG. 10B. The primary window identifier 1011 may be used to identify the primary window 520, and prompt the user that the primary window 520 exists. The user may tap the primary window identifier 1011 to trigger the electronic device 200 to display the primary window 520 shown in FIG. 10A-1 on the screen again.

As shown in FIG. 10B, the user may adjust a size of the sub-window 550. For a user operation of adjusting the size of the sub-window 550, refer to the description of the embodiment shown in FIG. 6B. Details are not described herein again.

For example, in response to a user operation of touching a right edge of the sub-window 550 and sliding rightward, the electronic device 200 may move the right edge of the sub-window 550 rightward, to increase a width of the sub-window 550. When the user operation of adjusting the sub-window 550 is released (for example, a finger of the user touching the right edge of the sub-window 550 leaves a screen of the electronic device 200), the electronic device 200 may determine an adjusted size of the sub-window 550. For example, when the user releases, at a position shown in FIG. 10C, the user operation of adjusting the size of the sub-window 550, the electronic device 200 may determine that a size of the sub-window 550 shown in FIG. 10C is the adjusted size.

As shown in FIG. 10C, after the size adjustment, a size of a display corresponding to the sub-window 550 is suitable for a user interface to be laid out in a parallel view style. The video application interface in an area 551 that is of the sub-window 550 and that is used to display the interface of the electronic device 100 may be adjusted to a parallel view style, so that a layout of the video application interface adapts to a display obtained after the size adjustment (that is, adapts to the sub-window 550 obtained after the size adjustment). When the video application interface is displayed in a parallel view style, a left area of the area 551 may display the main interface of the video application, and a right area of the area 551 may display a video playing interface of the video application (for example, a video playing interface of the video A). In this way, the user can watch a played video while browsing a video option in the video application. The parallel view style is not limited in embodiments of this application.

It may be understood that, the video application interface displayed in a parallel view style shown in FIG. 10C may be generated by the electronic device 100 after the electronic device 100 runs the video application, and then sent to the electronic device 200.

**The following describes another window size adjustment method provided in an embodiment of this application.**

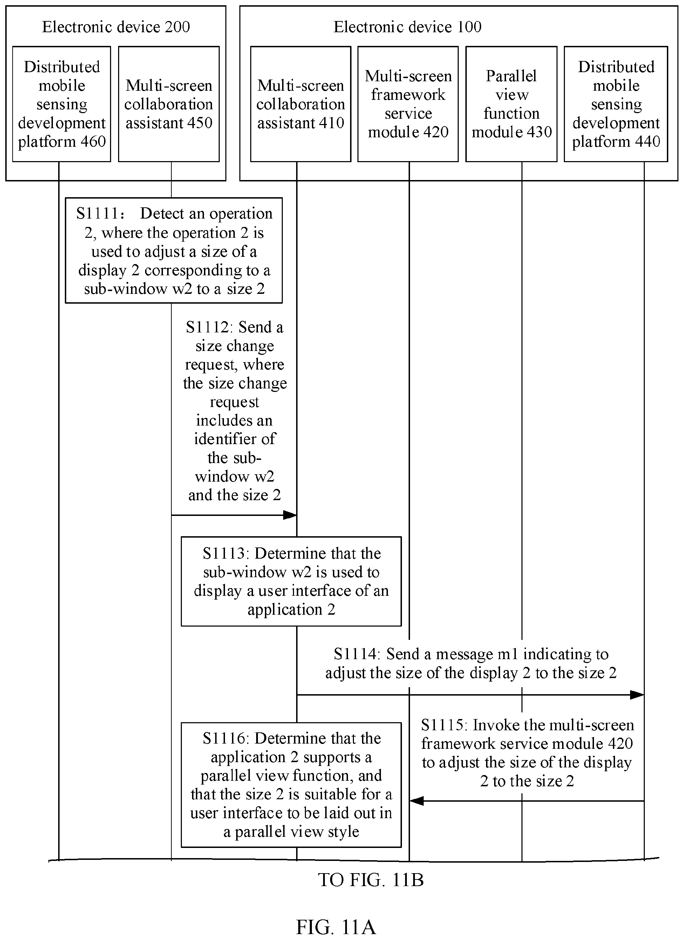

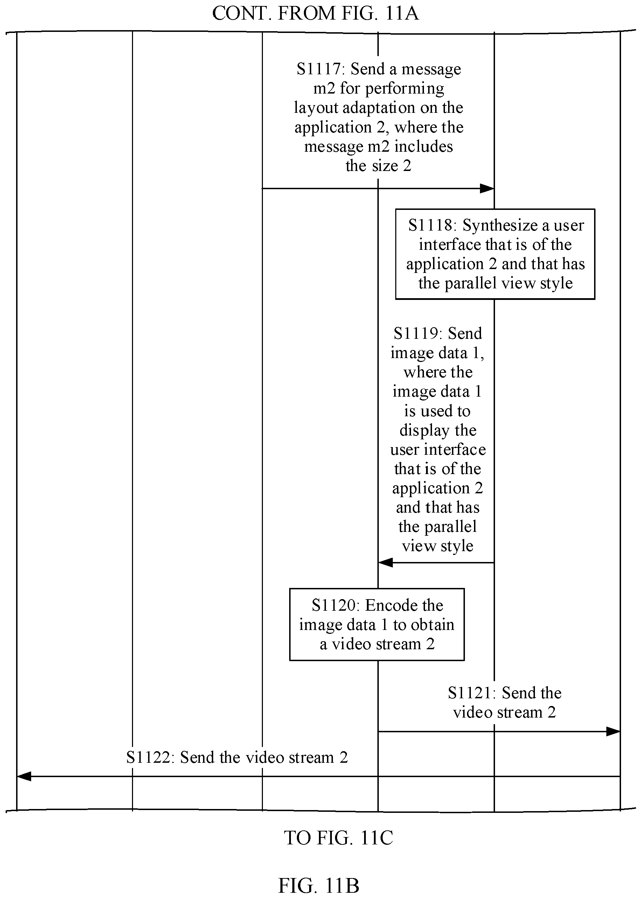

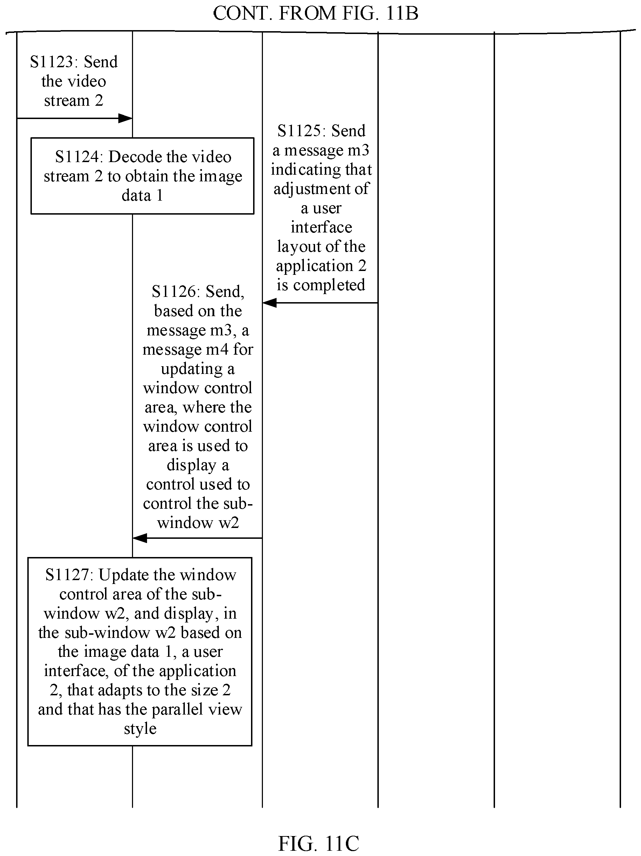

FIG. 11A to FIG. 11C are an example of a flowchart of another window size adjustment method. The method may include step S1111 to step S1127.

S1111: A multi-screen collaboration assistant 450 in the electronic device 200 detects an operation 2, where the operation 2 is used to adjust a size of a display 2 corresponding to a sub-window w2 to a size 2.

For the operation 2, refer to the description of the operation 1 in the embodiment shown in FIG. 9A and FIG. 9B. Details are not described herein again.

A length-width ratio of the display 2 whose size is the size 2 may be different from a length-width ratio of the display 2 obtained before the size adjustment. Herein, an example in which the size of the display 2 changes to the size 2 as the size of the sub-window w2 changes is specifically used for description.

S1112: The multi-screen collaboration assistant 450 may send a size change request to a multi-screen collaboration assistant 410 in the electronic device 100, where the size change request includes an identifier of the sub-window w2 and the size 2.

S1113: The multi-screen collaboration assistant 410 may determine that the sub-window w2 is used to display a user interface of an application 2.

S1114: The multi-screen collaboration assistant 410 sends, to a DMSDP 440 in the electronic device 100, a message m1 indicating to adjust the size of the display 2 to the size 2.

S1115: The DMSDP 440 invokes a multi-screen framework service module 420 to adjust the size of the display 2 to the size 2.

For step S1112 to step S1115, refer to step S912 to step S915 shown in FIG. 9A. Details are not described herein again. S1116: The multi-screen collaboration assistant 410 may determine that the application 2 supports a parallel view function, and that the size 2 is suitable for a user interface to be laid out in a parallel view style.

In some embodiments, when receiving the size change request in step S1112, the multi-screen collaboration assistant 410 may determine whether the application 2 displayed in the sub-window 2 supports a parallel view, and whether the size 2 is suitable for the user interface to be laid out in a parallel view style.

The electronic device 100 may obtain a list of applications supporting a parallel view. The list of applications supporting a parallel view may be stored in a cloud server. Alternatively, the electronic device 100 stores the list of applications supporting a parallel view, and obtains the list of applications supporting a parallel view from a local memory. The list of applications supporting a parallel view may include an identifier (for example, an application name) of an application that supports a parallel view function. The electronic device 100 may determine, by querying whether the application 2 is included in the list of applications supporting a parallel view, whether the application 2 supports a parallel view function.

The electronic device 100 may determine, by determining whether the size 2 belongs to a size range of a parallel view window, whether the size 2 is suitable for the user interface to be laid out in a parallel view style. In some embodiments, the size range of the parallel view window may include a length-width ratio range of the window. In some embodiments, the size range of the parallel view window may further include a length range of the window and a width range of the window. Content included in the size range of the parallel view window is not limited in this embodiment of this application. A window whose size is within the size range of the parallel view window may be suitable for the user interface to be laid out in a parallel view style.

When determining that the application 2 is in the list of applications supporting a parallel view, and the size 2 belongs to the size range of the parallel view window, the electronic device 100 may determine that the application 2 supports a parallel view function, and that the size 2 is suitable for the user interface to be laid out in a parallel view style.

A method for determining whether the application 2 supports a parallel view function and a method for determining whether the size of the display 2 is suitable for the user interface to be laid out in a parallel view style are not limited in this embodiment of this application.

In some embodiments, if the application 2 does not support a parallel view function, and/or if the size 2 is not suitable for the user interface to be laid out in a parallel view style, the electronic device 100 and the electronic device 200 may adjust the size of the sub-window w2 and the layout of the application interface in the sub-window w2 according to the method shown in FIG. 9A and FIG. 9B.

S1117: The multi-screen collaboration assistant 410 sends a message m2 for performing layout adaptation on the application 2, where the message m2 includes the size 2.

S1118: A parallel view function module 430 synthesizes a user interface that is of the application 2 and that has a parallel view style.

For example, if the application 2 is a video application, for a user interface of the application 2 having a parallel view style, refer to the video application interface displayed in the sub-window 550 shown in FIG. 10C.

S1119: The parallel view function module 430 sends image data 1 to the multi-screen framework service module 420, where the image data 1 is used to display the user interface that is of the application 2 and that has a parallel view style.

S1120: The multi-screen framework service module 420 encodes the image data 1 to obtain a video stream 2. S1121: The multi-screen framework service module 420 sends the video stream 2 to the DMSDP 440.

S1122: The DMSDP 440 sends the video stream 2 to a DMSDP 460 of the electronic device 200.

S1123: The DMSDP 460 sends the video stream 2 to the multi-screen collaboration assistant 450.

S1124: The multi-screen collaboration assistant 450 decodes the video stream 2 to obtain the image data 1.

S1125: The multi-screen framework service module 420 sends, to the multi-screen collaboration assistant 410, a message m3 indicating that adjustment of a user interface layout of the application 2 is completed.

S1126: The multi-screen collaboration assistant 410 sends, to the multi-screen collaboration assistant 450 based on the message m3, a message m4 for updating a window control area, where the window control area is used to display a control used to control the sub-window w2.

The message m4 may include an identifier of the application 2 and control information used to control the sub-window w2.

For step S1125 and step S1126, refer to the descriptions of step S921 and step S922 shown in FIG. 9B. Details are not described herein again.

S1127: The multi-screen collaboration assistant 450 updates the window control area of the sub-window w2, and displays, in the sub-window w2 based on the image data 1, a user interface, of the application 2, that adapts to the size 2 and that has the parallel view style.

The multi-screen collaboration assistant 450 may update the window control area of the sub-window w2 based on the message m4, and display, based on the image data 1, the user interface of the application 2 in an area that is in the sub-window w2 and that is used to display an interface of the electronic device 100. The user interface has a parallel view style, and a layout adapts to the display 2 whose size is the size 2. For step S1127, refer to the scenario shown in FIG. 10C.

It may be understood that a sequence of numbering and describing the steps in the method shown in FIG. 11A to FIG. 11C does not constitute a limitation on a sequence of performing the steps. For example, step S1114 and step S1116 may be simultaneously performed by the multi-screen collaboration assistant 410. Alternatively, the multi-screen collaboration assistant 410 may first perform any one of step S1114 and step S1116, and then perform the other one. For another example, step S1121 and step S1125 may be simultaneously performed by the multi-screen framework service module 420. Alternatively, the multi-screen framework service module 420 may first perform any one of step S1121 and step S1125, and then perform the other one.

It can be learned from the method shown in FIG. 11A to FIG. 11C that, in a process of multi-screen collaboration between the electronic device 100 and the electronic device 200, the user may adjust the size of the multi-screen collaboration window displayed on the electronic device 200. The user may adjust the size of the multi-screen collaboration window to a plurality of different sizes. A length-width ratio of the multi-screen collaboration window can be changed. After the size of the multi-screen collaboration window changes, a layout of an application interface displayed in the multi-screen collaboration window may also be adaptively adjusted to adapt to the multi-screen collaboration window whose size changes. In this way, the user may better allocate, by adjusting the size of the multi-screen collaboration window, appropriate display areas to one or more multi-screen collaboration windows and one or more windows displayed when the electronic device 200 runs another application, to improve screen space utilization of the electronic device 200. The user may adjust the size of the multi-screen collaboration window to a desired size. This can improve user experience of performing multi-screen collaboration by using the device.

The layout of the application interface may include a layout displayed in a parallel view style. That is, the user may adjust the size of the multi-screen collaboration window, so that the layout of the application interface displayed in the multi-screen collaboration window changes to the parallel view style. According to the foregoing method, the user can conveniently use the parallel view function in a multi-screen collaboration scenario, to improve efficiency of working and learning through an application.

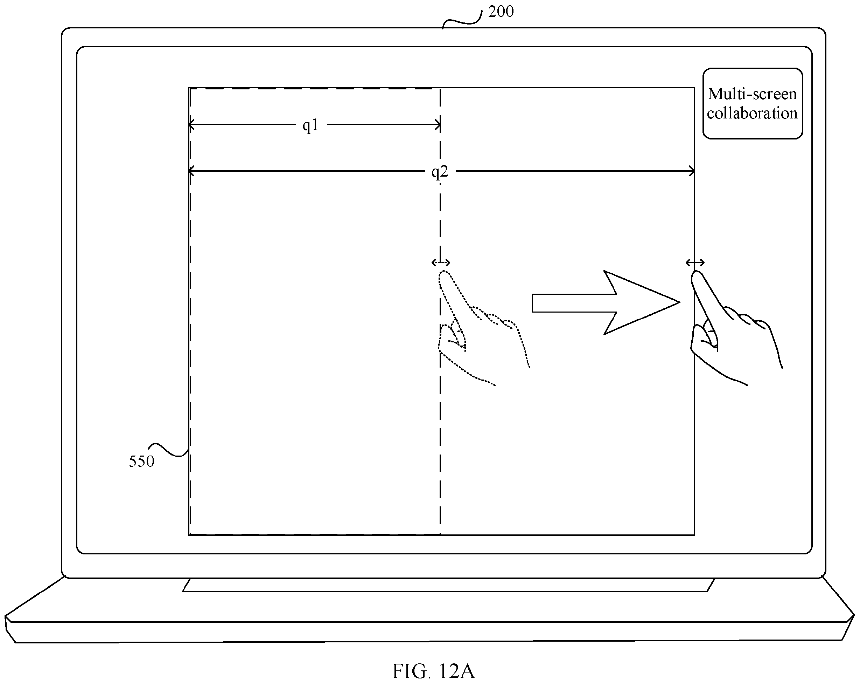

**FIG. 12A to FIG. 12C** **show an example of another window size adjustment scenario according to an embodiment of this application.**

Herein, an example in which the size of the sub-window 550 shown in FIG. 10B is adjusted is used for description.

As shown in FIG. 12A, the electronic device 200 may display the sub-window 550. The user may adjust a size of the sub-window 550. In response to a user operation of touching a right edge of the sub-window 550 and sliding rightward, the electronic device 200 may move the right edge of the sub-window 550 rightward, to increase a width of the sub-window 550. When the user operation of adjusting the sub-window 550 is released (for example, a finger of the user touching the right edge of the sub-window 550 leaves a screen of the electronic device 200), the electronic device 200 may determine an adjusted size of the sub-window 550. For example, after the size adjustment shown in FIG. 12A, a horizontal width of the sub-window 550 changes from q1 to q2, and a vertical height (namely, a length) remains unchanged.

In some embodiments, the electronic device 200 may send the adjusted size of the sub-window 550 (or an adjusted size of a display corresponding to the sub-window 550) to the electronic device 100. The electronic device 100 may determine, based on the adjusted size of the sub-window 550, whether an application interface displayed in the sub-window 550 has a layout that adapts to the adjusted size of the sub-window 550. If determining that the application interface displayed in the sub-window 550 has the layout that adapts to the adjusted size of the sub-window 550, an application displayed in the sub-window 550 supports a parallel view function, and the adjusted size is suitable for a user interface to be laid out in a parallel view style, the electronic device 100 may query, through the electronic device 200, the user whether the application interface is presented in a single-window style or a parallel view style.

The single-window style may indicate that a user interface corresponding to one application task (for example, one activity) is displayed in the sub-window 550. In the single-window style, when the user interface displayed in the sub-window 550 is switched, the application task corresponding to the user interface may change. For a scenario in which the electronic device 200 displays the application interface in the sub-window 550 in the single-window style, refer to the sub-window 550 shown in FIG. 10B.

The parallel view style may indicate that user interfaces corresponding to two application tasks (for example, two activities) are displayed in the sub-window 550. For example, a left area in the sub-window 550 displays a user interface corresponding to one of the two application tasks, and a right area displays a user interface corresponding to the other application task. The user interfaces corresponding to the two application tasks may be independent of each other in the sub-window 550. The user may separately perform an operation on the user interfaces corresponding to the two application tasks. For a scenario in which the electronic device 200 displays the application interface in the sub-window 550 in a parallel view style, refer to the sub-window 550 shown in FIG. 10C.

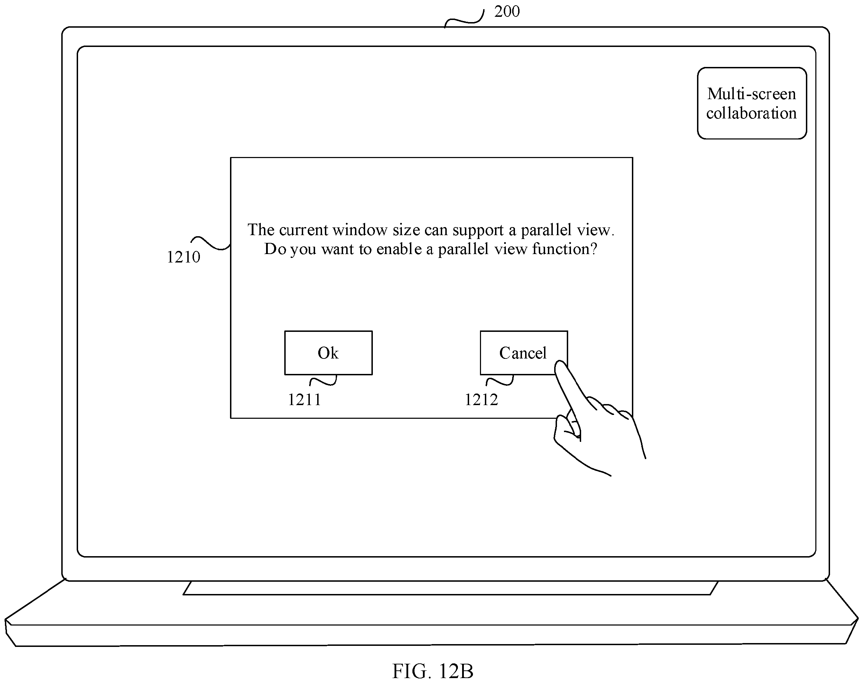

For example, the size of the sub-window 550 is adjusted to a size of the horizontal width q2 shown in FIG. 12A. The electronic device 100 may determine that the video application interface displayed in the sub-window 550 of the adjusted size has a layout that is displayed in a single-window style and that adapts to a current sub-window 550. In addition, the video application displayed in the sub-window 550 supports a parallel view function, and the adjusted size of the sub-window 550 is suitable for an application interface to be laid out in a parallel view style. The electronic device 100 may send a query message to the electronic device 200. Based on the query message, the electronic device 200 may display a prompt box 1210 shown in FIG. 12B.

As shown in FIG. 12B, the prompt box 1210 may be used to query the user whether to enable a parallel view function. The prompt box 1210 may include a text prompt "The current window size can support a parallel view. Do you want to enable a parallel view function". The prompt box 1210 may further include an ok control 1211 and a cancellation control 1212. The ok control 1211 may be used to enable the parallel view function. The cancellation control 1212 may be used to cancel enabling of the parallel view function. That is, the user may enable, by using the ok control 1211, the video application interface in the sub-window 550 to be displayed in a parallel view style, and enable, by using the cancellation control 1212, the video application interface in the sub-window 550 to be displayed in a single-window style.

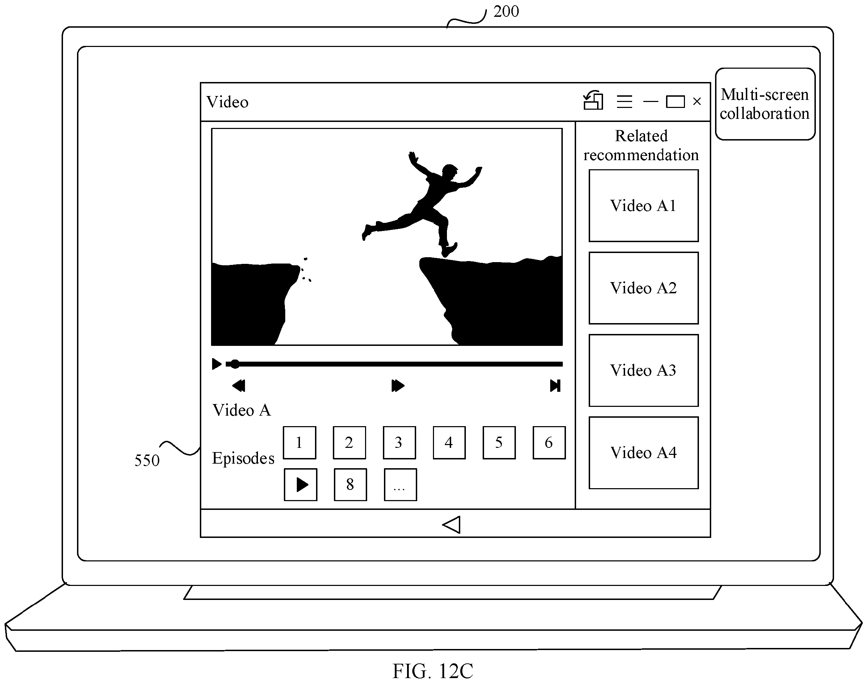

In response to a user operation on the cancellation control 1212 shown in FIG. 12B, the electronic device 200 may display the sub-window 550 shown in FIG. 12C.

As shown in FIG. 12C, a video application interface (namely, a video playing interface of a video A) in the sub-window 550 may be displayed in a single-window style. A layout of the video application interface in the sub-window 550 shown in FIG. 12C may be referred to as a layout of a columnar display style (namely, a columnar layout). For example, two columns may be displayed on the video application interface: a left column and a right column. Playing content of the video A may be displayed in an area in which the left column is located. Recommendation options of related videos may be displayed in an area in which the right column is located. The columnar layout of the video application interface is not specifically limited in this embodiment of this application.

It can be learned by comparing the sub-windows 550 in FIG. 10B and FIG. 12C that, after the size adjustment shown in FIG. 12A, the layout of the video application interface in the sub-window 550 changes. The layout change may be specifically represented as a change in an interface element arrangement manner of the video application interface and a change in an interface element display style of the video application interface.

When detecting the user operation on the cancellation control 1212 shown in FIG. 12B, the electronic device 200 may send, to the electronic device 100, a message for canceling enabling of the parallel view function. The electronic device 100 may generate a video application interface in the sub-window 550 shown in FIG. 12C, and encode the video application interface to obtain a video stream. The electronic device 100 may send the video stream to the electronic device 200. The electronic device 200 may then display the sub-window 550 shown in FIG. 12C based on the video stream.

In some embodiments, when detecting a user operation on the ok control 1211 shown in FIG. 12B, the electronic device 200 may send, to the electronic device 100, a message for enabling the parallel view function. The electronic device 100 may generate a user interface having a parallel view style in the video application, and encode the user interface to obtain a video stream. The electronic device 100 may send the video stream to the electronic device 200. Then, the electronic device 200 may display, in the sub-window 550 based on the video stream, a video application interface having a parallel view style. For the video application interface having the parallel view style in the sub-window 550, refer to the interface displayed in the sub-window 550 shown in FIG. 10C. Details are not described herein again.

In some embodiments, an application may support a parallel view function. In the foregoing multi-screen collaboration scenario, a parallel view style and a non-parallel view style in an application may have a preset priority sequence. For example, a priority of the parallel view style is higher than a priority of the non-parallel view style. The non-parallel view style may include the portrait display style in the sub-window 550 shown in FIG. 10B and the columnar display style in the sub-window 550 shown in FIG. 12C. The non-parallel view style is not limited in embodiments of this application. The non-parallel view style may also be referred to as a single-window style. The name is not limited in embodiments of this application. When the multi-screen collaboration window whose size is adjusted is suitable for displaying the application interface in both a non-parallel view style and a parallel view style, the electronic device 100 may determine, based on a priority order of the parallel view style and the non-parallel view style in the application, how to display the application interface in the multi-screen collaboration window. For example, a priority of the parallel view style is higher than a priority of the non-parallel view style. In this case, the electronic device 100 may draw and render the application interface based on the parallel view style, to obtain display data of the application interface. Then, the electronic device 100 may send the display data (namely, a video stream) to the electronic device 200. The electronic device 200 may display the application interface in the multi-screen collaboration window in a parallel view style.

In different applications, the parallel view style and the non-parallel view style may have different priorities. This is not limited in this embodiment of this application.

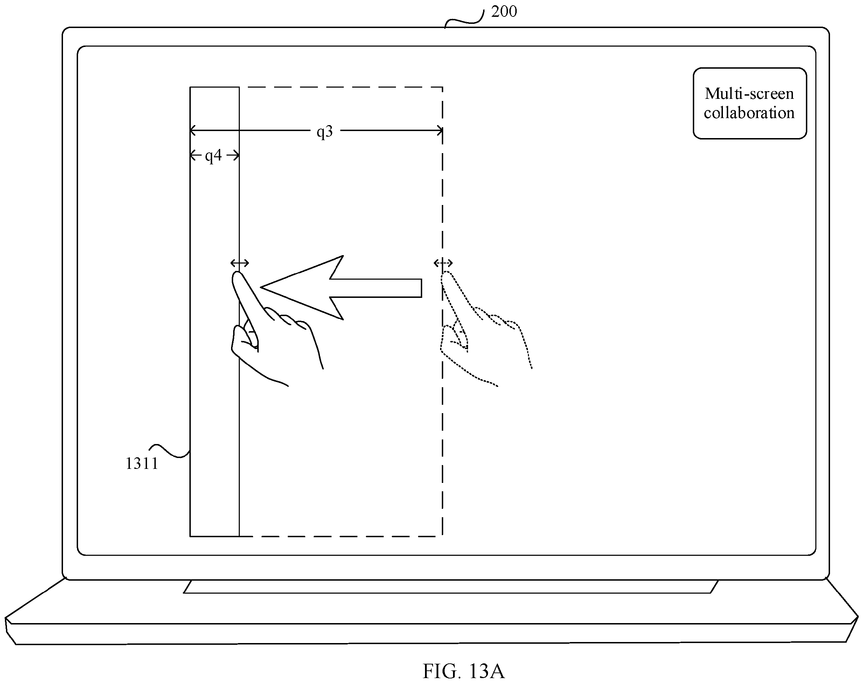

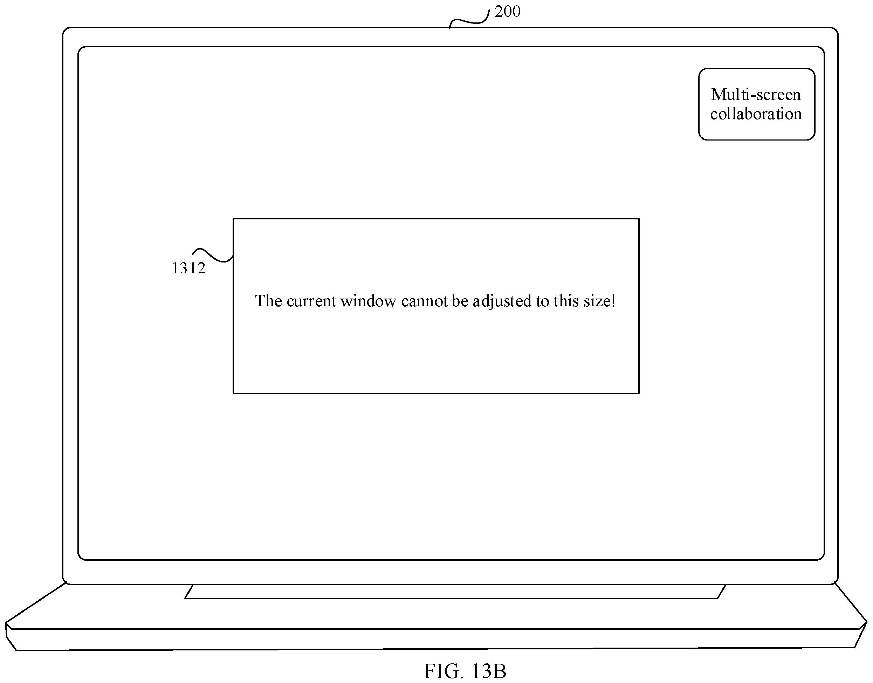

**FIG. 13A** **and** **FIG. 13B** **show an example of another window size adjustment scenario according to an embodiment of this application.**

As shown in FIG. 13A, the electronic device 200 may display a multi-screen collaboration window 1311. The user may adjust a size of the multi-screen collaboration window 1311.

In some embodiments, in response to a user operation of touching a right edge of the multi-screen collaboration window 1311 and sliding leftward, the electronic device 200 may slide a right edge of a sub-window rightward, to reduce a width of the multi-screen collaboration window 1311. When the operation of adjusting the multi-screen collaboration window 1311 is released (for example, a finger of the user touching the right edge of the multi-screen collaboration window 1311 leaves a screen of the electronic device 200), the electronic device 200 may determine whether an adjusted size of the multi-screen collaboration window 1311 is within a preset size range.

The preset size range may include a range to which a length-width ratio of a window belongs. Optionally, the preset size range may further include a range to which a vertical height (namely, a length) of a window belongs, and a range to which a horizontal width of the window belongs. If the size of the multi-screen collaboration window 1311 obtained after the size adjustment does not fall within the preset size range, the electronic device 200 may prompt the user that the size is invalid, and a size of the multi-screen collaboration window 1311 cannot be adjusted to the size.

For example, after the size adjustment shown in FIG. 13A, a horizontal width of the multi-screen collaboration window 1311 changes from q3 to q4, and a vertical height remains unchanged. The electronic device 200 may determine that a corresponding size of the multi-screen collaboration window 1311 shown in FIG. 13A when the width is q4 does not belong to the preset size range, and the electronic device 200 may display a prompt box 1312 shown in FIG. 13B. The prompt box 1312 may be used to prompt the user that a size of the multi-screen collaboration window 1311 cannot be adjusted to the size. Specific content of the prompt box 1312 is not limited in this embodiment of this application. In addition, after displaying the prompt box shown in FIG. 13B, the electronic device 200 may still display the application interface based on a size of the multi-screen collaboration window 1311 corresponding to the width q3 shown in FIG. 13A. That is, the size of the multi-screen collaboration window 1311 does not change.

It may be understood that, in the foregoing embodiment, a case in which the user adjusts the size of the multi-screen collaboration window to an extreme size (for example, a size with an extremely large length-width ratio or an extremely small length-width ratio) may be reduced. In the foregoing extreme size, the application interface in the multi-screen collaboration window may not be displayed. The foregoing embodiment can help the user more appropriately adjust a size of the multi-screen collaboration window.

This is not limited to the method for prompting the user that the size adjustment is invalid shown in FIG. 13A and

FIG. 13B. In some embodiments, in a process in which the user adjusts the multi-screen collaboration window, if the size of the multi-screen collaboration window reaches a boundary value of the preset size range, the user may not continue to adjust the size of the multi-screen collaboration window in a direction that exceeds the preset size range. This may also reduce a case in which the user adjusts the size of the multi-screen collaboration window to an extreme size.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A window size adjustment method, wherein the method comprises:
displaying, by a first device, a first window, wherein the first window is used to display an interface of a second device, the first window has a first size, first content displayed in the first window is presented based on a first interface layout, and the first interface layout adapts to the first window having the first size;
receiving, by the first device, a first operation, wherein the first operation is used to adjust a size of the first window to a second size, and a first length-width ratio of the first window in the first size is different from a second length-width ratio of the first window in the second size; and
in response to the first operation, displaying, by the first device, the first window in the second size, and presenting second content in the first window based on a second interface layout, wherein both the second content and the first content comprise third content, the second interface layout adapts to the first window having the second size, and the second interface layout is different from the first interface layout.

2. The method according to claim 1, wherein the third content is the first content; and
the second content comprises the first content and fourth content, and both the first content and the fourth content are interface content of a first application.

3. The method according to claim 2, wherein the second interface layout is a columnar layout, the columnar layout indicates that a window is divided into a plurality of rows and/or a plurality of columns to display interface content on an application interface, the second content is interface content on an application interface of the first application, and the first content and the fourth content are respectively displayed in two rows or two columns of display areas of the first window.

4. The method according to claim 2, wherein the first application supports a first function, and the first function is used to display two application interfaces of a same application in one window, wherein the first content is interface content on a first application interface of the first application, and the fourth content is interface content on a second application interface of the first application; and
the presenting second content in the first window based on a second interface layout specifically comprises:
determining a first display area and a second display area in the first window, displaying the first content in the first display area, and displaying the fourth content in the second display area.

5. The method according to claim 1, wherein the second content is the first content; or
the second content comprises a part of interface elements in the first content.

6. The method according to any one of claims 1 to 3 and 5, wherein the first size is within a first size range, the second size is within a second size range, and the first size range is different from the second size range; and
an interface element arrangement manner of the third content in the first interface layout and an interface element arrangement manner of the third content in the second interface layout are different.

7. The method according to any one of claims 1 to 3 and 5, wherein an interface element arrangement manner of the third content in the first interface layout and an interface element arrangement manner of the third content in the second interface layout are the same, and an interface element display style of the third content in the first interface layout and an interface element display style of the third content in the second interface layout are different.

8. The method according to claim 7, wherein both the first size and the second size are within a first size range.

9. The method according to any one of claims 1 to 8, wherein after the displaying, by the first device, the first window in the second size, the method further comprises:
receiving, by the first device, a second operation, wherein the second operation is used to adjust the size of the first window to a third size, and a length-width ratio of the first window in the third size is the same as the second length-width ratio; and
in response to the second operation, displaying, by the first device, the first window in the third size, and presenting the second content in the first window based on a third interface layout, wherein the third interface layout adapts to the first window having the third size, wherein
an interface element arrangement manner of the second content in the third interface layout and an interface element arrangement manner of the second content in the second interface layout are the same, and an interface element display style of the second content in the third interface layout and an interface element display style of the second content in the second interface layout are different.

10. The method according to any one of claims 1 to 9, wherein the method further comprises:
displaying, by the first device, a second window, wherein content displayed in the second window is synchronized with content displayed on a screen of the second device; and a length-width ratio of the second window is determined based on a screen size of the second device, and the length-width ratio of the second window remains unchanged.

11. A window size adjustment method, wherein the method is applied to a communication system comprising a first device and a second device, and the method comprises:
displaying, by the first device, a first window, wherein the first window is used to display an interface of the second device, the first window has a first size, first content displayed in the first window is presented based on a first interface layout, and the first interface layout adapts to the first window having the first size;
receiving, by the first device, a first operation, wherein the first operation is used to adjust a size of the first window to a second size, and a first length-width ratio of the first window in the first size is different from a second length-width ratio of the first window in the second size;
in response to the first operation, sending, by the first device, a first message to the second device, wherein the first message comprises a first identifier of the first window and the second size;
determining, by the second device based on the first message, second content presented based on a second interface layout, and obtaining first display data, wherein both the second content and the first content comprise third content, the second interface layout adapts to the first window having the second size, and the second interface layout is different from the first interface layout;
sending, by the second device, the first display data to the first device; and
displaying, by the first device, the first window in the second size, and presenting the second content in the first window based on the first display data and the second interface layout.

12. The method according to claim 11, wherein the third content is the first content; and
the second content comprises the first content and fourth content, and both the first content and the fourth content are interface content of a first application.

13. The method according to claim 12, wherein the second interface layout is a columnar layout, the columnar layout indicates that a window is divided into a plurality of rows and/or a plurality of columns to display interface content on an application interface, the second content is interface content on an application interface of the first application, and the first content and the fourth content are respectively displayed in two rows or two columns of display areas of the first window.

14. The method according to claim 12, wherein the first application supports a first function, and the first function is used to display two application interfaces of a same application in one window, wherein the first content is interface content on a first application interface of the first application, and the fourth content is interface content on a second application interface of the first application; and
the presenting the second content in the first window based on the second interface layout specifically comprises:
determining a first display area and a second display area in the first window, displaying the first content in the first display area, and displaying the fourth content in the second display area.

15. The method according to claim 11, wherein the second content is the first content; or
the second content comprises a part of interface elements in the first content.

16. The method according to any one of claims 11 to 13 and 15, wherein the first size is within a first size range, the second size is within a second size range, and the first size range is different from the second size range; and
an interface element arrangement manner of the third content in the first interface layout and an interface element arrangement manner of the third content in the second interface layout are different.

17. The method according to any one of claims 11 to 13 and 15, wherein an interface element arrangement manner of the third content in the first interface layout and an interface element arrangement manner of the third content in the second interface layout are the same, and an interface element display style of the third content in the first interface layout and an interface element display style of the third content in the second interface layout are different.

18. The method according to claim 17, wherein both the first size and the second size are within a first size range.

19. The method according to any one of claims 11 to 18, wherein after the displaying, by the first device, the first window in the second size, the method further comprises:
receiving, by the first device, a second operation, wherein the second operation is used to adjust the size of the first window to a third size, and a length-width ratio of the first window in the third size is the same as the second length-width ratio;
in response to the second operation, sending, by the first device, a second message to the second device, wherein the second message comprises the first identifier and the third size;
adjusting, by the second device, an interface layout of the second content to a third interface layout based on the second message, and obtaining second display data, wherein the third interface layout adapts to the first window having the third size;
sending, by the second device, the second display data to the first device; and
displaying, by the first device, the first window in the third size, and presenting the second content in the first window based on the second display data and the third interface layout, wherein
an interface element arrangement manner of the second content in the third interface layout and an interface element arrangement manner of the second content in the second interface layout are the same, and an interface element display style of the second content in the third interface layout and an interface element display style of the second content in the second interface layout are different.

20. The method according to any one of claims 11 to 19, wherein the method further comprises:
obtaining, by the second device, third display data based on interface content displayed on a screen, and sending the third display data to the first device; and
displaying, by the first device, a second window, and displaying fifth content in the second window based on the third display data, wherein the fifth content is synchronized with the content displayed on the screen of the second device; and a length-width ratio of the second window is determined based on a screen size of the second device, and the length-width ratio of the second window remains unchanged.

21. A window size adjustment method, wherein the method comprises:
determining, by a second device, to display first content in a first window, wherein the first content is presented based on a first interface layout, the first window is a window that is displayed on a first device and that is used to display an interface of the second device, and the first interface layout adapts to the first window having a first size;
obtaining, by the second device, a first video stream based on the first content and the first interface layout, and sending the first video stream to the first device, wherein the first video stream is used to present the first content in the first window based on the first interface layout;
receiving, by the second device, a first message, wherein the first message comprises a first identifier of the first window and a second size, and a first length-width ratio of the first window in the first size is different from a second length-width ratio of the first window in the second size;
determining, by the second device based on the first message, to display second content in the first window, wherein the second content is presented based on a second interface layout, both the second content and the first content comprise third content, the second interface layout adapts to the first window having the second size, and the second interface layout is different from the first interface layout; and
obtaining, by the second device, a second video stream based on the second content and the first interface layout, and sending the second video stream to the first device, wherein the second video stream is used to present the first content in the first window based on the second interface layout.

22. The method according to claim 21, wherein the third content is the first content; and
the second content comprises the first content and fourth content, and both the first content and the fourth content are interface content of a first application.

23. The method according to claim 22, wherein the second interface layout is a columnar layout, the columnar layout indicates that a window is divided into a plurality of rows and/or a plurality of columns to display interface content on an application interface, and the second content is interface content on an application interface of the first application.

24. The method according to claim 22, wherein the first application supports a first function, and the first function is used to display two application interfaces of a same application in one window, wherein the first content is interface content on a first application interface of the first application, and the fourth content is interface content on a second application interface of the first application.

25. The method according to any one of claims 21 to 24, wherein after the sending the second video stream to the first device, the method further comprises:
receiving, by the second device, a second message, wherein the second message comprises the first identifier and a third size, and a length-width ratio of the first window in the third size is the same as the second length-width ratio;
adjusting, by the second device, an interface layout of the second content to a third interface layout based on the second message, and obtaining a third video stream, wherein the third interface layout adapts to the first window having the third size, and the third video stream is used to present the first content in the first window based on the third interface layout, wherein
an interface element arrangement manner of the second content in the third interface layout and an interface element arrangement manner of the second content in the second interface layout are the same, and an interface element display style of the second content in the third interface layout and an interface element display style of the second content in the second interface layout are different; and
sending, by the second device, the third video stream to the first device.

26. An electronic device, wherein the electronic device comprises a memory and a processor, the memory is configured to store a computer program, and the processor is configured to invoke the computer program, for the electronic device to perform the method according to any one of claims 1 to 10 or claims 21 to 25.

27. A computer-readable storage medium, comprising instructions, wherein when the instructions are run on an electronic device, the electronic device is enabled to perform the method according to any one of claims 1 to 10 or claims 21 to 25.

28. A computer program product, wherein the computer program product comprises computer instructions, and when the computer instructions are run on an electronic device, the electronic device is enabled to perform the method according to any one of claims 1 to 10 or claims 21 to 25.
